(19) Europäisches Patentamt / European Patent Office / Office européen des brevets

(11) **EP 1 754 077 B1**

(12) **FASCICULE DE BREVET EUROPEEN**

(45) Date de publication et mention de la délivrance du brevet:
**10.12.2008 Bulletin 2008/50**

(21) Numéro de dépôt: **05775251.1**

(22) Date de dépôt: **07.06.2005**

(51) Int Cl.:
*G01S 5/02* (2006.01)    *G01S 5/06* (2006.01)
*A63B 29/02* (2006.01)

(86) Numéro de dépôt international:
**PCT/FR2005/001388**

(87) Numéro de publication internationale:
**WO 2006/003294 (12.01.2006 Gazette 2006/02)**

(54) **SYSTEME DE LOCALISATION ULB POUR LE SECOURS AUX VICTIMES D'AVALANCHES.**

ULB-ORTUNGSSYSTEM ZUR RETTUNG VON LAWINENOPFERN

ULB LOCATION SYSTEM FOR RESCUING AVALANCHE VICTIMS

(84) Etats contractants désignés:
**AT BE BG CH CY CZ DE DK EE ES FI FR GB GR HU IE IS IT LI LT LU MC NL PL PT RO SE SI SK TR**

(30) Priorité: **07.06.2004 FR 0451118**

(43) Date de publication de la demande:
**21.02.2007 Bulletin 2007/08**

(73) Titulaire: **COMMISSARIAT A L'ENERGIE ATOMIQUE**
**75015 Paris (FR)**

(72) Inventeurs:
• **DANIELE, Norbert**
  **F-38190 Bernin (FR)**
• **DENIS, Benoît**
  **F-38000 Grenoble (FR)**

(74) Mandataire: **Poulin, Gérard et al**
**Société BREVATOME**
**3, rue du Docteur Lancereaux**
**75008 Paris (FR)**

(56) Documents cités:
EP-A- 0 964 265          WO-A-02/03091
WO-A-03/104837          DE-A- 2 628 193
FR-A- 2 783 607          US-A1- 2003 137 453

• CAPKUN S ET AL: "GPS-FREE POSITIONING IN MOBILE AD-HOC NETWORKS" PROCEEDINGS OF THE ANNUAL HAWAII INTERNATIONAL CONFERENCE ON SYSTEM SCIENCES, XX, XX, 3 janvier 2001 (2001-01-03), pages 1-10, XP008001836
• CAFFERY J ET AL: "SUBSCRIBER LOCATION IN CDMA CELLULAR NETWORKS" IEEE TRANSACTIONS ON VEHICULAR TECHNOLOGY, IEEE INC. NEW YORK, US, vol. 47, no. 2, mai 1998 (1998-05), pages 406-416, XP000870833 ISSN: 0018-9545 cité dans la demande

**Description**

## DOMAINE TECHNIQUE ET ART ANTERIEUR

La présente invention concerne un système dépourvu de référence GPS (pour « Global Positioning System » en langue anglaise) comprenant un ensemble de modules ULB Emetteurs/Récepteurs et permettant d'assurer un positionnement rapide et suffisamment précis des victimes d'avalanches. Une telle application concerne principalement les groupes de skieurs hors pistes, randonneurs à ski ou à pied, raquettistes, glaciairistes, alpinistes. Un système unique permet indifféremment à une ou plusieurs victimes de se signaler, d'être détectées puis localisées sous la neige, et à un ou plusieurs secouristes (opportunistes, institutionnels, ou membres du groupe de randonnée) de mener une campagne de recherche autonome et rapide de ces victimes.

Les moyens de retrouver une personne totalement ensevelie sous la neige se sont longtemps limités aux chiens d'avalanche et aux sondes. Compte tenu de sa vitesse de prospection (1 hectare en 10 à 20 mn), le chien demeure encore à l'heure actuelle le moyen le plus efficace pour localiser rapidement une victime non coopérante.

Ces deux techniques ne peuvent être mises en oeuvre que par des secouristes extérieurs, qu'il faut donc, au préalable, prévenir et dont il faut attendre l'arrivée sur zone. Ce délai d'attente (alerte et acheminement des secours) est souvent trop long au regard des chances de survie d'une victime d'avalanche. Par conséquent, sondes et équipes cynotechniques ne permettent le plus souvent que de retrouver des victimes décédées.

Différents systèmes de secours aux victimes d'avalanche ont donc été étudiés pour augmenter les chances de survie de la victime. On peut classer ces systèmes en deux grandes catégories :

- les systèmes ne faisant pas appels aux ondes électromagnétiques,
- les systèmes basés sur l'utilisation d'ondes électromagnétiques.

Parmi ces derniers, le système le plus répandu et reconnu aujourd'hui à l'unanimité (Syndicat guides et accompagnateurs, ENSA, ANENA, CAF, FFME...) comme le plus performant est un système actif mis au point dans les années soixante-dix. Il s'agit de l'A.R.V.A. (pour « Appareil de Recherche de Victimes en Avalanches »), ou D.V.A. (pour « Détecteur de Victimes d'Avalanche »), ou encore L.V.S. (pour « Lawinen Verschütteten Suchgeräte » en langue allemande).

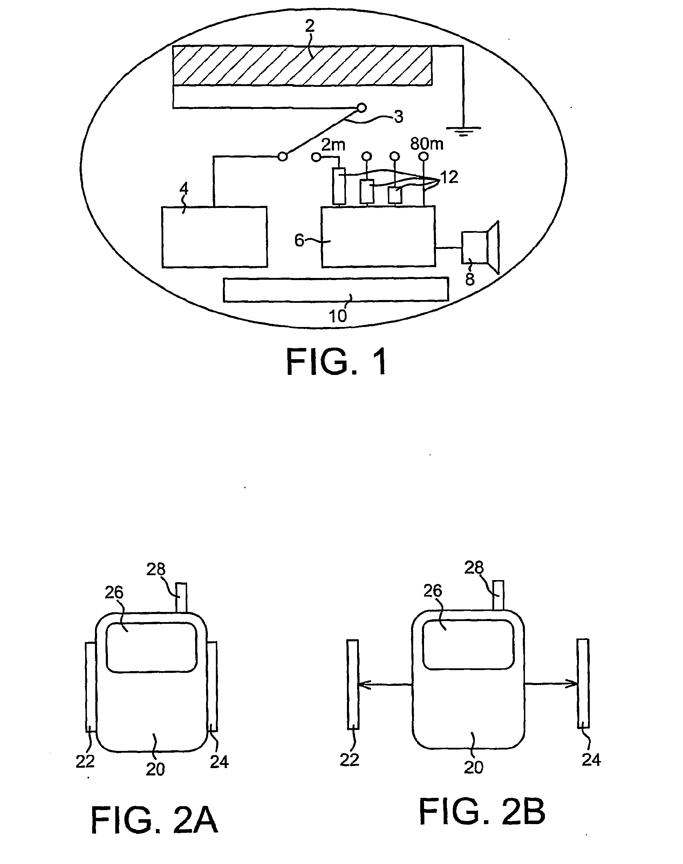

Ce système met en oeuvre un émetteurrécepteur électromagnétique. A l'Emission, l'A.R.V.A. crée un champ électromagnétique destiné à être capté par l'antenne dipôle d'un appareil de réception. Ce dernier transforme le signal reçu, après amplification, en un signal sonore. L'analyse de l'intensité de ce bip sonore permet de délivrer des informations sur la position relative de la victime à secourir. Le schéma de principe de l'ARVA est représenté en figure 1. Le dispositif comporte une antenne 2, un émetteur 4 (à 457 kHz), des atténuateurs 12 et un récepteur 6. L'ensemble est alimenté par des piles 10. Le basculement entre émission et réception se fait à l'aide d'un simple commutateur 3. En position réception, le signal issu de l'antenne 2 attaque une batterie 12 d'atténuateurs que l'utilisateur manipule en fonction de l'intensité sonore qu'il perçoit, par un haut - parleur 8, donc en fonction de sa distance relative par rapport à la victime. Plus l'utilisateur est proche et plus il augmente l'atténuation afin de pouvoir détecter les variations d'intensité. Dans les dernières générations d'appareils, dits « numériques », la commutation se fait de façon automatique. Le principe de recherche est donc basé sur des variations d'intensité sonore.

L'antenne 2 de l'ARVA est constituée d'une bobine enroulée sur une ferrite. Lorsqu'une liaison est établie, le maximum d'intensité est obtenu lorsque les antennes d'émission et de réception sont parallèles. L'orientation de l'ARVA est donc prépondérante, et l'utilisateur doit à chaque phase de la recherche adapter l'orientation du dispositif. Ceci est loin d'être naturel pour qui n'est pas familiarisé avec le diagramme de rayonnement d'un dipôle.

L'ARVA utilise une modulation très simple de type OOK (pour « ON/OFF Keying » en langue anglaise) directement appliquée sur une porteuse à 457 KHz. A l'état « 1 », la porteuse est émise, à l'état « 0 », elle est éteinte.

En réception, après un simple mélange avec une fréquence de référence décalée de quelques KHz par rapport à la fréquence porteuse de 457KHz, et après une amplification, le récepteur génère directement des bips sur des fréquences audibles qui viennent attaquer un haut parleur ou des écouteurs.

La méthode de recherche actuelle à l'aide de l'ARVA se déroule en trois phases :

Recherche du 1er signal (primaire) : après passage en réception sur le canal de portée maximale, cette phase consiste à balayer la zone d'avalanche à l'aide de l'ARVA. Etant donnée la portée limitée de l'appareil (typiquement de 20 à 40 m), cette phase peut être relativement longue si l'avalanche couvre une grande surface, et bien entendu si peu de sauveteurs opèrent sur la zone. A ce titre, différents schémas de couverture de la zone s'appliquent selon le nombre de sauveteurs.

Recherche secondaire : un signal ayant été détecté, cette phase peut se dérouler selon deux méthodes distinctes :

- la méthode en croix, systématique, mais laborieuse,
- la méthode du suivi des lignes de champ est plus rapide et tend à se généraliser. Les ellipses constituées par les lignes de champ ne correspondent évidemment pas au plus court chemin pour atteindre la victime. Par ailleurs, la marche dans une coulée d'avalanche est rendue très pénible par la présence de trous et de blocs, et il faut penser à conserver l'orientation de l'appareil sans oublier de changer les calibres de réception pour optimiser l'écoute, le tout en situation de stress.

Recherche finale : dans cette phase, le calibre minimal est utilisé (atténuation la plus forte correspondant à la distance mesurable la plus courte). De plus, il faut changer l'orientation de l'ARVA, et utiliser une méthode en croix au raz du sol. Si l'appareil de la victime est perpendiculaire à celui du sauveteur, alors deux maxima de champ apparaissent, et il faut creuser entre ces deux maxima. Une erreur classique consiste à s'arrêter au premier maximum et à creuser au mauvais endroit. Plus la profondeur est importante, plus ces maxima sont éloignés et plus le risque est grand si l'on s'arrête au premier maximum.

L'ARVA est une solution relativement rudimentaire (issu des techniques radio des années soixante-dix) et s'avère surtout d'utilisation très contraignante. Par ailleurs, il nécessite une formation spécifique pour le maniement du matériel et la méthode de recherche. Cet apprentissage se fait en général dans les clubs de ski et de montagne mais cela représente une infime partie des pratiquants de la montagne. Que dire des chances de survie des moniteurs et guides en situations réelles d'avalanche, lorsqu'ils sont accompagnés de clients qui dans la majorité des cas découvrent le maniement de l'ARVA in situ.

Comme chacun le sait, le temps est une donnée précieuse dans le contexte du secours aux victimes. A titre d'exemple, des études ont permis d'estimer que la probabilité de survie d'une victime ensevelie demeurait supérieure à 93% si les secours interviennent en moins de 15 minutes. Entre 15 et 45 minutes, on constate une décroissance rapide de la probabilité de survie de 93% à 26%. Cette brusque décroissance montre bien que tout se joue pendant les 30 premières minutes et permet d'illustrer l'importance du secours immédiat apporté par les compagnons de randonnée. Pour une personne rompue au maniement de l'ARVA, la localisation de la première victime prend entre 5 et 10 mn (sans compter la phase d'extraction à l'aide de la pelle). Dans le cas de plusieurs victimes ou pour des personnes non entraînées, le quart d'heure fatal est systématiquement dépassé. De toute évidence, pour diminuer le taux de mortalité, les méthodes de secours aux victimes d'avalanche doivent être améliorées et surtout accélérées.

Plus récemment, le concept de DETAV (pour DETection Aux victimes d'Avalanches) a été introduit. Il s'agit d'un capteur permettant de détecter automatiquement l'ensevelissement d'une personne sous une avalanche afin d'alerter, de la localiser ou de déclencher un dispositif permettant d'allonger le temps de survie.

DETAV mesure, à l'aide de capteurs, des paramètres permettant de savoir si la personne est en danger, tels que l'immobilité à l'aide d'un accéléromètre et la présence de neige à l'aide de capteurs optiques de proximité.

La mesure de l'état physiologique s'effectue donc indirectement par la capacité, ou non, à activer un bouton d'annulation d'alerte. En cas d'ensevelissement, cette incapacité confirme l'immobilisation. L'ensemble des informations est alors recueilli et analysé par un microcontrôleur qui assure l'interface avec tout autre matériel, par exemple, en provoquant le déclenchement d'un appel GSM. Ce principe n'est pas viable en tant que tel pour localiser les victimes, compte tenu des insuffisances de la technologie GSM et de sa couverture radio.

Aussi, il se pose le problème de trouver une solution palliative aux insuffisances des systèmes existants, et permettant de répondre de manière satisfaisante aux exigences de la recherche de victimes, et notamment de retrouver rapidement et simultanément de multiples victimes ensevelies, sans infrastructure, ou avec une infrastructure réduite (i.e. points de référence fixes, et/ou de ressources de calcul centralisées).

Un tel dispositif doit de préférence être doté d'une portée suffisante pour couvrir un théâtre opérationnel typique (e.g. une coulée de 1000m$^2$ à 10000m$^2$) ; par ailleurs, il doit être portatif, fiable, robuste, et de préférence à faible consommation, pour garantir la pérennité de son bon fonctionnement et une autonomie suffisante.

Le dispositif complet doit prévoir un mode de test. A tout moment, il doit être possible de contrôler le bon fonctionnement en Emission et en Réception de chaque unité, ainsi que la validité des données échangées entre les unités. L'expérience montre en effet que si ce contrôle n'est pas facilité, il peut être négligé par les éventuels utilisateurs.

Le dispositif doit être suffisamment performant dans chacune des trois phases de la recherche des victimes ensevelies (primaire, secondaire, finale).

Le dispositif doit être intuitif et simple d'utilisation avec un nombre de phases de recherche le plus faible possible.

Le dispositif doit éventuellement être en mesure de fournir aux sauveteurs des informations sur l'état de santé des victimes.L'invention proposée permet de gagner quelques précieuses minutes dans cette course contre le temps et de proposer, d'une part une solution simple dans sa mise en oeuvre, et d'autre part une solution ne nécessitant aucun apprentissage particulier.

**EXPOSE DE L'INVENTION**

La présente invention concerne tout d'abord un procédé de localisation d'un émetteur ULB à l'aide d'au moins un premier ensemble d'émetteurs/récepteurs ULB de recherche, comportant :

A) une étape de synchronisation des émetteurs/récepteurs ULB de recherche (au moins 3), disposés en des points différents, et d'estimation de la distance relative entre ces points,
B) une étape de réception par les émetteurs/récepteurs, de signaux émis par l'émetteur à localiser,
C) une étape de calcul de la position relative de ces points puis de celle de l'émetteur à localiser en fonction des durées entre l'instant d'arrivée des signaux émis par l'émetteur à localiser au niveau des émetteurs/récepteurs de recherche et une référence de temps commune à ces émetteurs/récepteurs.

On pourra avoir préalablement défini une zone d'intérêt, par exemple une zone d'accumulation de neige résultant d'une avalanche, ou un bâtiment ou un terrain, ou contenant un bâtiment ou un terrain, l'émetteur ULB à localiser étant situé dans ladite zone.
Les émetteurs de recherche sont alors positionnés dans cette zone d'intérêt, avantageusement éloignés l'un de l'autre.
L'invention concerne donc également un procédé de localisation d'un émetteur ULB à l'aide d'au moins un premier ensemble d'émetteurs/récepteurs ULB de recherche, comportant une étape préalable de définition d'une zone d'intérêt, par exemple une zone d'accumulation de neige résultant d'une avalanche, ou un bâtiment ou un terrain, ou une zone contenant un bâtiment ou un terrain, l'émetteur ULB à localiser étant situé dans ladite zone, et de positionnement des émetteurs dans cette zone d'intérêt, avantageusement éloignés l'un de l'autre, puis :

A) une étape de synchronisation de ces émetteurs/récepteurs ULB de recherche, disposés en des points différents, et d'estimation de la distance relative entre ces points,
B) une étape de réception par les émetteurs/récepteurs, de signaux émis par l'émetteur à localiser,
C) une étape de calcul de la position relative de ces points puis de celle de l'émetteur à localiser en fonction des durées entre l'instant d'arrivée des signaux émis par l'émetteur à localiser au niveau des émetteurs/récepteurs de recherche et une référence de temps commune à ces émetteurs/récepteurs.

Un tel procédé ne nécessite pas de points à des références préalablement fixés sur la scène à investiguer et dont les positions sont connues à priori, contrairement aux procédé et dispositif mis en oeuvre dans l'art antérieur.
L'étape A peut comporter les sous - étapes suivantes:

- une synchronisation des émetteurs/récepteurs,
- un déploiement, sur une scène occasionnelle, des émetteurs/récepteurs,
- une estimation ou un calcul de la distance relative entre les émetteurs/récepteurs.

Après déploiement, deux des émetteurs/récepteurs restent fixes.
De préférence, les signaux ULB utilisés sont dans une gamme de fréquence inférieure à 1GHz.
Les trames d'impulsions utilisées et transmises comportent typiquement un préambule de synchronisation, une délimitation du préambule, puis des données utiles.
Avant l'étape A, une étape de synchronisation préliminaire des émetteurs/récepteurs de recherches, dans un état groupé, peut avoir eu lieu.
On dispose ainsi d'une référence de synchronisation absolue.
Lors de la phase de recherche, chaque émetteur/récepteur de recherche peut mettre en oeuvre une ou plusieurs fenêtre d'observation correspondant chacune à une gamme de distance, l'ensemble des gammes de distance pouvant couvrir une gamme totale de distance comprise entre 0 et quelques centaines de mètres, par exemple 500 m ou 700 m.
Les étapes A, B, C peuvent être répétées, pour actualiser la position de l'émetteur/récepteur à localiser, notamment lorsque l'un des émetteurs/récepteurs de recherche, est déplacé par rapport aux deux autres. Au moins deux émetteurs/récepteurs sont alors fixes, tandis qu'au moins un est mobile.
L'étape de calcul peut permettre de fournir une position de l'émetteur/récepteur à rechercher dans une surface à deux dimensions.
Au cours de l'étape A, l'estimation de la position relative des points peut mettre en oeuvre un calcul de minimisation d'une fonction de coût, selon le critère du maximum de vraisemblance.
L'un des émetteurs/récepteurs peut, lors de l'étape B, être déplacé par rapport aux autres.
Au moins un des émetteurs/récepteur de recherche peut être mobile, et les autres fixes, ou au moins un des autres fixes.

Selon un mode de réalisation, un procédé selon l'invention comporte:

- l'émission, par un premier émetteur/récepteur, d'un signal de référence, et sa réception par les autres, par exemple un deuxième et un troisième émetteurs/récepteurs,
- la réception, par les émetteurs/récepteurs de recherche, de signaux émis par l'émetteur/récepteur à localiser,
- la transmission, vers le premier émetteur/récepteur, d'informations relatives aux temps de transit du signal de référence et à la durée entre une référence de temps commune aux émetteurs/récepteurs de recherche et l'instant d'arrivée au niveau de ces émetteurs/récepteurs, des signaux émis par l'émetteur/récepteur à localiser.

L'étape A de synchronisation peut comporter :

- l'émission d'un signal de référence du premier émetteur/récepteur vers les autres émetteurs/récepteurs,
- l'estimation par les autres émetteurs/récepteurs des temps de transit du signal de référence vers eux mêmes (TR1R2, TR1R3).

Un procédé selon l'invention peut en outre comporter, entre les étapes B et C :

- l'estimation par les n émetteurs/récepteurs, respectivement de n durées (TV1R1, TV1R2, TV1R3) entre une référence de temps commune aux émetteurs/récepteurs et l'instant d'arrivée de signaux émis par l'émetteur à localiser,
- puis la transmission, vers l'un des émetteurs/récepteurs, des temps de transit et des durées précédemment estimées.

Avantageusement, un procédé selon l'invention comporte :

- la transmission, par un deuxième émetteur/récepteur vers les autres émetteurs/récepteurs, d'un signal comportant au moins :

- la deuxième durée (TV1R2) correspondant aux signaux émis par l'émetteur à localiser et reçus par le deuxième émetteur/récepteur.
- et le deuxième temps de transit du signal de référence (TR1R2),
- l'estimation, par un troisième émetteur/récepteur, d'un troisième temps de transit (TR2R3) du deuxième au troisième émetteur/récepteur, égal au temps de transit dudit signal émis par le deuxième émetteur/récepteur.

Un tel procédé comporte éventuellement en outre le calcul ou l'estimation, par le premier émetteur/récepteur, d'un temps de transit (TR2R1) du deuxième au premier émetteur/récepteur, égal au temps de transit dudit signal émis par le deuxième émetteur/récepteur vers le premier émetteur/récepteur.
Le procédé peut en outre comporter :

- la transmission par le troisième émetteur/récepteur, vers au moins le premier émetteur/récepteur, d'un signal, comportant au moins :

- le troisième temps de transit (TR2R3) du deuxième au troisième émetteur/récepteur,
- la troisième durée (TV1R3) relative aux signaux émis par l'émetteur à localiser et reçus par le troisième émetteur/récepteur,
- et le troisième temps de transit du signal de référence (TR1R3) du premier au troisième émetteur/récepteur.

Un calcul ou une estimation, par le premier émetteur/récepteur, d'un temps de transit (TR3R1) du troisième au premier émetteur/récepteur, égal au temps de transit dudit signal émis par le troisième émetteur/récepteur vers le premier émetteur/récepteur peut en outre être prévu.
Un émetteur/récepteur additionnel peut être utilisé, synchronisé avec le premier ensemble d'émetteurs/récepteurs et positionné par rapport à ces émetteurs/récepteurs.
Au moins un émetteur/récepteur peut donc être ajouté au premier ensemble d'émetteurs/récepteur de recherche et participer au procédé de localisation défini par les étapes A, B et C définies ci-dessus.
Une participation immédiate du nouvel émetteur est de préférence assurée. Ce peut être par la nature des signaux émis, comportant, pour chaque trame, un préambule de synchronisation. Il se synchronise alors avec les autres émetteurs/récepteurs simultanément ou presque simultanément à sa participation à la localisation.
Selon un exemple, ce nouvel émetteur/récepteur fait partie d'un deuxième ensemble d'émetteurs/récepteurs, par exemple au nombre de trois émetteurs récepteurs.
Le premier ensemble d'émetteurs/récepteurs peut être au nombre de 3, l'émetteurs/récepteurs additionnel étant un quatrième émetteurs/récepteur.

Un procédé selon l'invention peut alors comporter :

- l'émission, par le premier émetteur/récepteur, d'un signal de référence,
- la réception, par les 4 émetteurs/récepteurs de recherche, de signaux émis par l'émetteur/récepteur à localiser,
- la transmission, vers le premier émetteur/récepteur, d'informations relatives aux temps de transit du signal de référence et des signaux émis par l'émetteur/récepteur à localiser.

L'étape A) de synchronisation comporte par exemple:

- l'émission d'un premier signal de référence du premier émetteur/récepteur vers les deuxième, troisième et quatrième émetteurs/récepteurs,
- l'estimation ou la calcul, par les deuxième, troisième et quatrième émetteurs/récepteurs des temps de transit du signal de référence vers les deuxième, troisième et quatrième émetteurs/récepteurs (TR1R2, TR1R3, TR1R1').

Un tel procédé peut en outre comporter :

- l'émission, par le quatrième émetteur/récepteur, d'un deuxième signal de référence,
- puis l'émission, par le premier émetteur/récepteur, d'un troisième signal de référence,
- le calcul, par les premier et quatrième émetteurs/récepteurs, d'une quantité représentative d'un temps de transit aller - retour d'un signal émis par chacun des premier et quatrième émetteurs/récepteurs, fonction du temps de transit du quatrième au premier émetteur/récepteur (TR1'R1) et du premier au quatrième émetteur/récepteur (TR1R1').

Entre les étapes B et C peuvent être prévus:

- le calcul par les premier, deuxième, troisième et quatrième émetteurs/récepteurs respectivement d'une première, d'une deuxième, d'une troisième et d'une quatrième durée (TV1R1, TV1R2, TV1R3, TV1R1') entre une référence de temps commune et l'instant d'arrivée de signaux émis par l'émetteur à localiser,
- puis la transmission, vers le premier émetteur/récepteur, des deuxième, troisième et quatrième durées entre une référence de temps commune et l'instant d'arrivée de signaux émis par l'émetteur à localiser.

Ce procédé peut en outre comporter :

- la transmission, par le quatrième émetteur/récepteur vers les premier, deuxième et troisième émetteurs/récepteurs, d'un signal comportant au moins la quatrième durée (TV1R1') entre une référence de temps commune et l'instant d'arrivée de signaux émis par l'émetteur à localiser,
- le calcul ou l'estimation, par le premier, le deuxième, et le troisième émetteur/récepteur, respectivement d'un quatrième, cinquième et sixième temps de transit (TR1'R1, TR1'R2, TR1'R3) du quatrième au premier (20), deuxième et troisième émetteur/récepteur, égal au temps de transit dudit signal émis par le quatrième émetteur/récepteur.

Ce procédé peut également comporter :

- la transmission, par le deuxième émetteur/récepteur vers les premier, troisième et quatrième émetteurs/récepteurs, d'un signal comportant au moins :

  • la deuxième durée entre une référence de temps commune (TV1R2) et l'instant d'arrivée de signaux émis par l'émetteur à localiser,
  • et le cinquième temps de transit (TR1'R2),

- le calcul ou l'estimation, par le premier, le troisième et le quatrième émetteur/récepteur, respectivement d'un septième, huitième, neuvième temps de transit (TR2R1, TR2R1', et TR2R3) du deuxième respectivement au premier, quatrième et troisième émetteur/récepteur, égal au temps de transit dudit signal émis par le deuxième émetteur/récepteur vers chacun des premier, troisième et quatrième émetteur/récepteur.

Peuvent également être prévus:

- la transmission, par le troisième émetteur/récepteur vers les premier, deuxième et quatrième émetteurs/récepteurs, d'un signal comportant au moins :

- • la troisième durée entre une référence de temps commune et l'instant d'arrivée (TV1R3) de signaux émis par l'émetteur à localiser,
- • le sixième temps de transit (TR1'R3),
- • et le neuvième temps de transit (TR2R3),

- le calcul ou l'estimation, par le premier, le deuxième et le quatrième émetteur/récepteur, respectivement d'un dixième, onzième, douzième temps de transit (TR3R1, TR3R1', et TR3R2) du troisième respectivement au premier, quatrième et deuxième émetteur/récepteur, égal au temps de transit dudit signal émis par le troisième émetteur/récepteur vers chacun des premier, quatrième et deuxième émetteurs/récepteurs.

Le quatrième émetteur/récepteur peut faire partie d'un deuxième ensemble de trois émetteurs/récepteurs.

Afin d'optimiser la recherche, un deuxième ensemble d'au moins trois émetteurs/récepteurs peut mettre en oeuvre les étapes A, B, C du procédé mentionné ci-dessus, en parallèle, ou de manière indépendante, par rapport au premier ensemble.

Lorsque l'émetteur/récepteur à localiser est enseveli sous de la neige, une correction peut être effectuée pour tenir compte de retards dans les temps d'arrivée dus à la propagation des signaux dans la neige.

L'invention concerne également un dispositif de localisation d'un émetteur/récepteur ULB, comportant :

- au moins 3 émetteurs/récepteurs de recherche, comportant chacun des moyens émetteurs/récepteurs de signaux ULB,
- des moyens pour calculer la position d'un émetteur à localiser en fonction des temps de parcours de signaux, émis par cet émetteur à localiser, vers les 3 émetteurs/récepteurs de recherche,
- des moyens de visualisation pour indiquer au moins la position de l'émetteur à localiser par rapport à celle des 3 émetteurs/récepteurs de recherche.

De préférence, les trois émetteurs/récepteurs sont groupés en position de repos, et sont aptes à être désolidarisés lors d'une localisation d'un émetteur ULB.

Un tel dispositif peut comporter des moyens pour synchroniser les trois émetteurs/récepteurs.

Des moyens peuvent être prévus pour synchroniser les trois émetteurs/récepteurs à l'état groupé.

Des moyens peuvent en outre être prévus pour synchroniser les trois émetteurs/récepteurs à l'état désolidarisé.

Les moyens pour calculer la position d'un émetteur à localiser et les moyens de visualisation peuvent avantageusement faire partie d'un des trois émetteurs/récepteurs.

L'invention concerne également un dispositif de localisation d'un émetteur ULB, comportant au moins 3 émetteurs/récepteurs de recherche, programmés pour mettre en oeuvre un procédé tel que décrit ci-dessus.

Un dispositif selon l'invention peut être réalisé en technologie CMOS ou BiCMOS.

La présente invention met en oeuvre une liaison radio ULB bas-débit pour localiser les victimes d'avalanches.

Plus précisément, l'invention peut utiliser soit la bande haute, soit la bande basse du spectre RF (par exemple de 10 à 960 MHz, avec un niveau de densité spectrale de puissance de - 41 dBm/MHz), allouée aux systèmes ULB par les organismes officiels de régulation (« FCC » pour « Federal Communications Commission » en langue anglaise) pour des applications « outdoor » et les applications sécurité de type radar pénétrant.

Dans la gamme basse de fréquences, la pénétration des matériaux, de la neige dans le présent contexte, par les ondes électromagnétiques est particulièrement favorable et permet d'assurer systématiquement, par transmission, la présence d'un trajet direct correspondant au trajet géométrique (« Line Of Sight », en langue anglaise), réduisant de façon notable l'erreur sur les distances relatives estimées dues au canal de propagation, et par conséquent l'erreur finale sur la position estimée de la/des victimes à secourir.

En outre, l'invention exploite la capacité des systèmes ULB pour hybrider des transmissions radio numériques bas-débit et les fonctions de localisation.

Selon un mode de réalisation, des capteurs peuvent être positionnés sur le corps des victimes, ces capteurs permettant de recueillir et de relayer, à destination des sauveteurs, via un lien radio ULB, des informations telles que l'état physiologique et les paramètres vitaux des victimes potentielles.

Selon la présente invention on peut donc mener à bien un positionnement quasi instantané, bidimensionnel (reconstitution d'une topologie relative bidimensionnelle) et suffisamment précis de dispositifs ULB ensevelis dans la neige, en l'absence d'infrastructures ou de points de référence fixes dotés de module GPS, ou de points géoréférencés par tout autre moyen.

Pour cela, la présente invention s'appuie, d'une part, sur un système de communication autonome ULB assurant une détection précise de l'instant d'arrivée des impulsions émises, une synchronisation précise des dispositifs, ainsi que la transmission d'information utile à la recherche comme l'identifiant et, éventuellement, des informations relatives à l'intégrité physique des victimes, d'autre part sur des techniques classiques de localisation passive pour le positionnement de ces victimes.

## BREVE DESCRIPTION DES FIGURES

- La figure 1 représente schématiquement un dispositif de l'art antérieur,
- les figures 2A et 2B représentent un dispositif selon l'invention,
- la figure 3 représente schématiquement un exemple de réalisation d'un dispositif selon l'invention,
- les figures 4A et 4B représentent des signaux utilisables dans le cadre de la présente invention,
- la figure 5 représente une trame d'un signal pouvant être utilisé dans le cadre de la présente invention,
- la figure 6 représente schématiquement le déroulement d'un procédé selon l'invention,
- la figure 7A est une description synoptique d'un procédé selon l'invention, dans le cas d'un seul sauveteur,
- la figure 7B est la description synoptique d'un mode de réalisation selon l'invention, dans le cas de plusieurs sauveteurs,
- la figure 7C est une description synoptique d'un procédé selon l'art antérieur,
- les figures 8A et 9 illustrent les différentes phases d'un procédé selon l'invention,
- la figure 8B représente deux ensembles de recherche selon l'invention, en mode de recherche eh parallèle,
- la figure 10 illustre le cas de localisation de plusieurs victimes par un dispositif selon l'invention,
- la figure 11 illustre le choix d'une orientation de référence,
- la figure 12 représente les échanges d'informations lors de l'intervention d'un deuxième sauveteur,
- la figure 13 représente un masque FCC pour les applications ULB extérieures.

## DESCRIPTION DETAILLEE DES MODES DE REALISATION DE L'INVENTION

On désigne par la suite la présente invention sous le vocable ALVA (pour Appareil de Localisation des Victimes d'Avalanches)

Comme illustré sur les figures 2A et 2B, un dispositif selon l'invention se présente sous la forme d'un ensemble de modules émetteurs/récepteurs ULB 20, 22, 24, par exemple trois modules mais l'invention peut aussi être réalisée avec un nombre n > 3 d'émetteurs/récepteurs.

Ces modules sont de préférence initialement solidarisés entre eux. Au repos, c'est - à - dire en mode veille, seul l'un des modules, de préférence le module 20, peut être actif en mode émission, les autres étant inactifs.

Si une procédure de recherche est amorcée, on commute le dispositif en mode recherche, les modules initialement inactifs étant en particulier activés. La solidarisation initiale des modules peut permettre une synchronisation immédiate des références de ces modules à ce stade.

Les n modules (par exemple : 3) se désolidarisent alors (figure 2B) pour former un ensemble de n points de référence permettant un positionnement bidimensionnel des victimes.

De préférence, le dispositif 20 centralise les informations et les calculs en cours de recherche et coordonne la procédure. Il comporte un écran 26 d'affichage et une antenne 28, et est chargé de collecter et centraliser les informations provenant des autres modules (modules 22, 24), ainsi que du calcul des positions.

Un module 20 est porté par le sauveteur pendant la phase de recherche d'une victime. Un émetteur ULB est également porté par la victime. Avantageusement, cet émetteur peut être le module actif (en émission) d'un autre ALVA au repos (en mode veille).

Ce module principal 20 comprend un émetteur/récepteur ULB bas-débit ainsi qu'un écran LCD 26 qui permet l'affichage, en temps réel, des coordonnées des points inconnus pendant la recherche (position des points de référence et position des points inconnus à localiser).

Par défaut, c'est-à-dire quand l'ALVA n'est pas en mode de recherche, l'émetteur de ce module est actif et permet de transmettre un signal comprenant entre autre des informations propres au porteur (identifiant, éventuellement état de santé du porteur...).

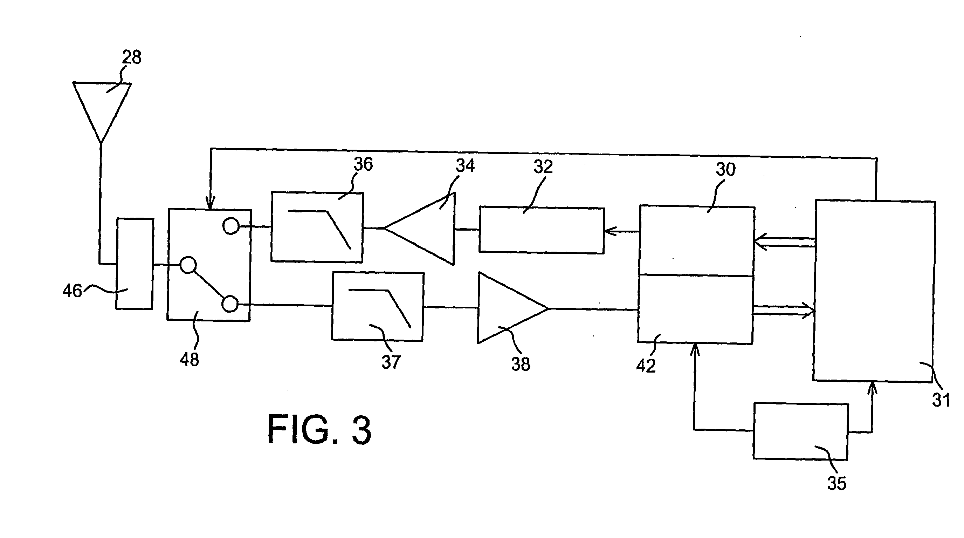

Un exemple de réalisation de l'émetteur/récepteur basé sur une approche quasi « tout numérique », intégrable facilement dans des technologies silicium CMOS ou BiCMOS, est illustré en figure 3. Les architectures analogiques utilisant des mélangeurs ou des détecteurs d'énergie sont également applicables.

L'émetteur comporte un convertisseur 30 parallèle/série attaqué directement par les données à transmettre. Un dérivateur (filtre 32) permet une mise en forme des impulsions pour respecter le masque FCC. Un amplificateur 34 permet d'augmenter la puissance d'émission, si nécessaire. Un filtre 36 permet de supprimer d'éventuelles raies parasites dues à l'amplification.

Du point de vue de la réception, des moyens 37 de filtrage permettent de limiter les principales interférences des services HF, VHF et UHF.

Un amplificateur faible bruit 38 permet d'améliorer le facteur de bruit du récepteur. Les impulsions reçues sont ensuite échantillonnées et converties sur N bits. La fonction de conversion analogique - numérique peut être réalisée avec un seul convertisseur rapide 42 ou avec une batterie de M convertisseurs, M fois moins rapides. Un filtre commun 46 peut être placé avant le commutateur émission/réception 48, lui-même commandé par les moyens 31 de traitement numérique. Un signal d'horloge 35 est fourni au convertisseur 42 et aux moyens 31 de traitement numérique.

Un tel dispositif répond à des contraintes de coût, de consommation, de flexibilité et d'encombrement.

Le signal transmis par les moyens 20 est par exemple un train d'impulsions gaussiennes codées en séquence directe. La modulation utilisée peut être du type BPSK (pour « Bi Phase Shift Keying » en langue anglaise) ou PPM (pour « Pulse Position Modulation » en langue anglaise), ou OOK (« On-Off-Keying »). Il s'agit de respecter le masque proposé par les organismes de régulation.

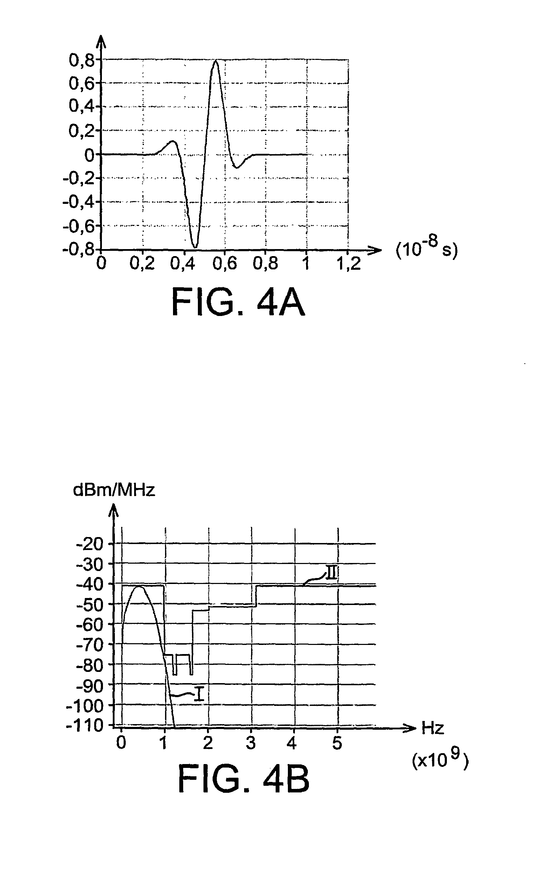

La figure 4A donne un exemple de forme d'onde temporelle utilisable dans le cadre de la présente invention.

La figure 4B présente également la densité spectrale de puissance associée (courbe I), en dBm/MHz, en accord avec le masque d'émission (courbe II) autorisé par la FCC.

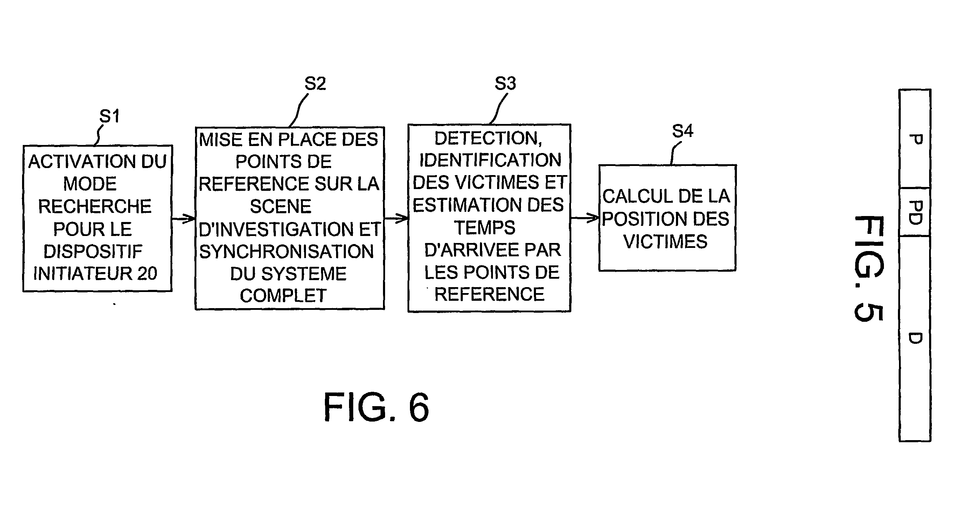

Le signal transmis peut l'être sous forme de trames. Dans la suite du document, on pourra parler de signal pour désigner une trame. Un exemple de format d'une trame est illustré figure 5. Chaque trame comprend alors :

- Un préambule (P), lui-même composé d'un train d'impulsions codées et non modulées, dédié à la synchronisation et à l'estimation du canal de propagation,

- Une délimitation (PD) du préambule, composée de la même séquence d'impulsions que la séquence utilisée pour le préambule, mais avec une variante clairement identifiable (par exemple une inversion de polarité),

- Des données utiles (D) composées de trains d'impulsions codées et modulées.

Un exemple de procédure de recherche va maintenant être décrit, en liaison avec les figures 6 à 9.

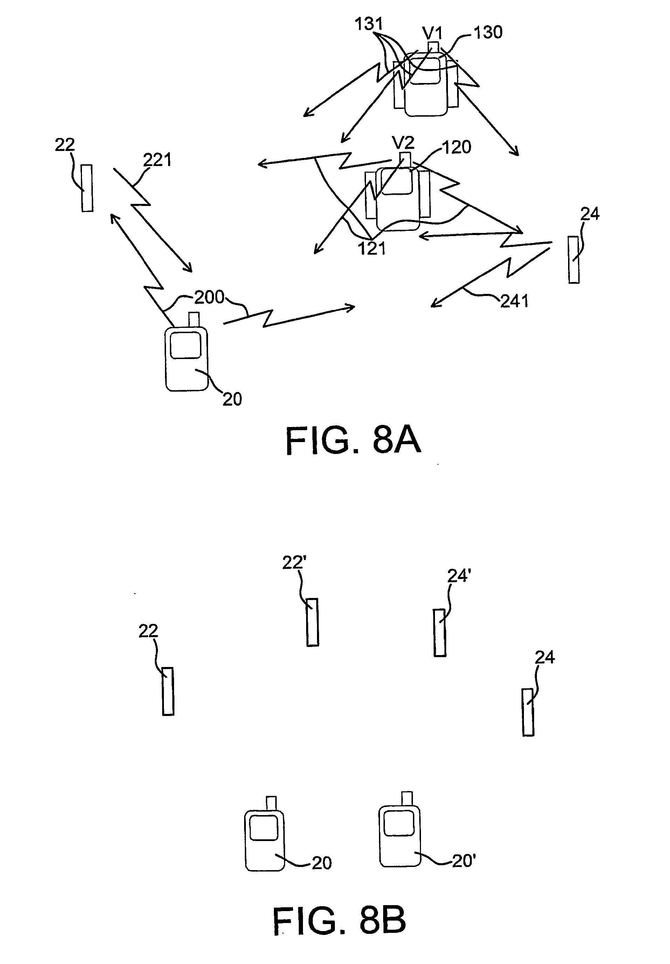

Sur la figure 8A sont représentés, outre le dispositif 20, les modules 22 et 24 en position séparée du dispositif central 20, ainsi que les dispositifs 120 et 130 de deux victimes V1 et V2, par exemple deux personnes ensevelies sous la neige.

Si le porteur d'un dispositif complet 120 est enseveli sous une avalanche, le module 120 du dispositif enseveli continue à émettre un signal de référence conforme à la trame précédemment décrite et comprenant donc un préambule (P), destiné à la synchronisation et à l'estimation de canal, puis des données relatives au porteur de ce module (identifiant, éventuellement état de santé...).

Ce signal de référence, qui est émis périodiquement, permet d'assurer une localisation de la victime quand il est détecté par tout autre système complet, tel que l'ensemble des n (par exemple : n = 3) modules 20,22,24, basculé en mode recherche (porté par un membre du groupe de randonnée équipé et/ou par les secours institutionnels dépêchés sur la zone, ou par tout autre sauveteur opportuniste équipé). La victime n'a pour cela rien de particulier à faire.

Les séquences d'étalement utilisées par défaut à l'émission par tous les dispositifs sont donc identiques et considérées comme universelles.

La localisation des victimes peut se dérouler de la manière suivante, illustrée sur les figures 6, 7A, 8A et 9.

Après activation de la procédure de recherche (figure 6 : S1) il y a émission d'un signal de synchronisation par le module 20 dans l'état groupé du dispositif.

Le signal de synchronisation est récupéré par les modules 22 et 24, qui sont donc strictement synchronisés avec le module 20.

Les modules 22, 24 sont désolidarisés du module 20, et placés sur la zone de recherche, éventuellement par simple jet des modules sur le terrain ou sur la neige. Ils restent ensuite immobiles pendant la recherche.

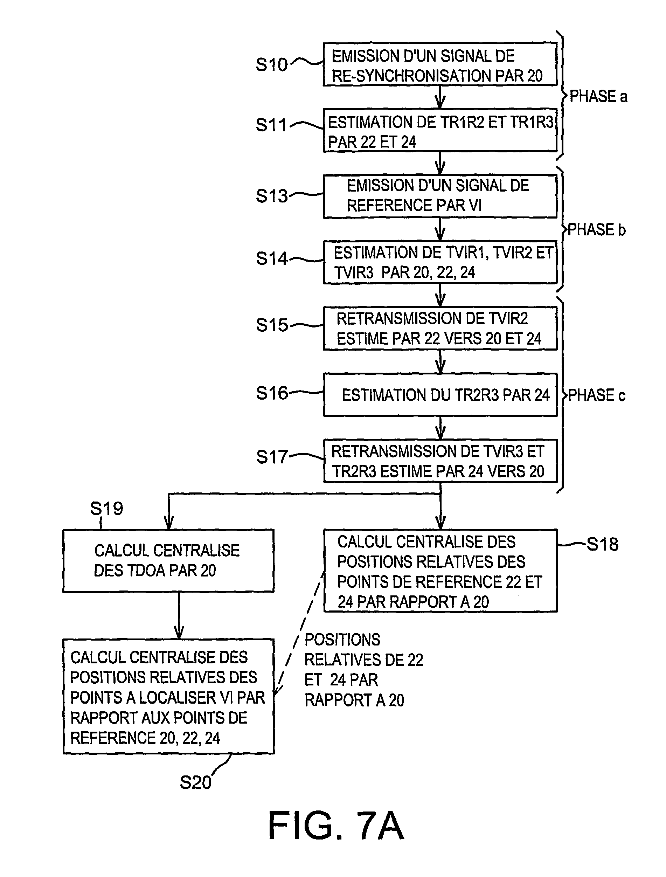

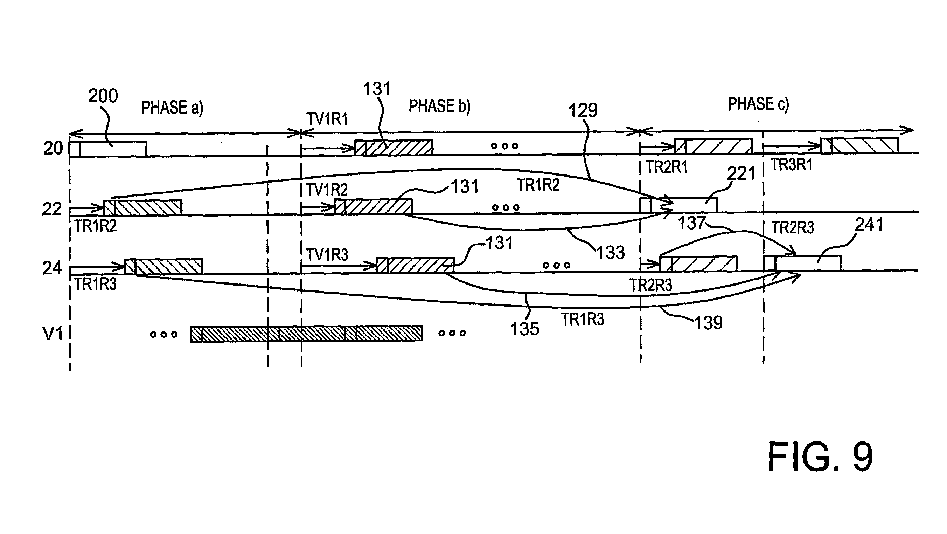

Le module 20 émet ensuite un signal de référence 200 avec une séquence d'étalement universelle (phase a de la figure 9 ; figure 6 : étape S2 ; figure 7A : S10), qui est reçu par les modules 22 et 24.

Avantageusement la séquence d'étalement universelle est différente de la séquence utilisée par la victime.

Chacun des modules 22 et 24 estime l'instant d'arrivée de ce signal et en déduit le temps de transit TR1R2 et TR1R3 de ce même signal correspondant au temps écoulé entre l'instant d'arrivée de ce signal et l'instant présumé de son émission. Le module 22 peut alors estimer la distance relative entre les modules 20 et 22, et le module 24 la distance relative entre les modules 20 et 24 (figure 7A : S11).

Ces informations sur les temps TR1R2, TR1R3 et les distances correspondantes seront ensuite transmises au module 20, (de préférence au cours de l'étape c), comme indiqué ci-dessous.

Le temps de transit du module 22 au module 24 (TR2R3), et donc la distance entre 22 et 24, pourraient aussi être estimés à cette étape en prévoyant, par exemple, l'émission d'une trame de référence par le module 22. Mais, pour des raisons d'économie, et également parce que d'autres informations doivent être transmises ultérieurement des moyens 22 aux moyens 24, on peut aussi ne procèder à cette mesure ou estimation qu'au cours de l'étape c), comme expliqué ci-dessous.

Chaque module 20, 22 et 24, recherche ensuite, après un temps défini par le protocole par rapport à l'émission du signal 200, les signaux de référence 121, 131 (figure 8A). Ces signaux 121,131 sont émis par les éventuels dispositifs ensevelis 120, 130 avec une séquence d'étalement universelle (phase b de la figure 9) spécifiée par le protocole et différente de celle utilisée par les modules 20,22,24 en mode recherche. Chaque module estime l'instant d'arrivée respectif de ces signaux et le temps écoulé TV1R1, TV1R2, TV1R3 entre cet instant d'arrivée et une référence de temps locale commune imposée par le protocole via le module coordinateur 20 (correspondant en l'occurrence au début de la phase b), (figure 7A : étapes S13 et S14).

Sur la figure 9 seul le signal 131 est représenté. Il est reçu par les modules 20,22,24 à des instants différents, l'émetteur 130 n'étant en général pas équidistant de chacun de ces moyens ou modules.

Il y a ensuite synchronisation sur les temps d'arrivée de ce signal 131 et démodulation des données transmises par la, ou les, victimes. Cette démodulation permet l'association, dans chaque module 20,22,24, du délai écoulé pour l'arrivée du signal 131 avec l'identifiant de la victime. Il en va de même pour le signal 121.

Les informations relatives à la, ou aux, victimes peuvent alors être récupérées dans chacun des modules 20,22,24 (figure 6 : étape S3).

Ces informations (par exemple nombre de victimes, identifiant des victimes et temps d'arrivée des signaux associés) sont ensuite relayées, des modules 22 et 24 vers le module 20, sous forme de signaux 221 et 241 (figures 8 et 9).

Le signal 221 est émis par les moyens 22 et arrive dans les moyens 20 et 24 respectivement après un temps de transit TR2R1 et TR2R3 (figure 9, phase c). Sur la figure 9, les flèches 129 et 133 indiquent que le signal 221 contient au moins l'information relative à TR1R2, l'information reçue par les moyens 22, en provenance des victimes, lors de l'étape b), et l'information estimée à partir de ce signal reçu des victimes et notamment l'information relative à TV1R2 (figure 7A : étapes S15 et S16).

De même, le signal 241 est émis par les moyens 24 et arrive dans les moyens 20 après un temps de transit TR3R1 (figure 9, phase c).

Les flèches 135, 137 et 139 indiquent que le signal 241 contient :

- d'une part les informations estimées par les moyens 24 lors des étapes a) et b), donc en particulier TR1R3 et TV1R3 (étape S17),
- les informations utiles reçues de la victime (identifiant,...),
- d'autre part les informations contenues dans le signal 221 et reçues des moyens 22 lors de la première partie de l'étape c), donc en particulier TR2R3, TR1R2 et TV1R2, et celles estimées à partir de l'instant d'arrivée de ce signal 221 (en paticulier TR2R3). On rappelle que ce signal 221 contenait déjà, comme expliqué ci-dessus, les informations reçues et estimées par les moyens 22 lors des étapes a et b).

En fait les informations relatives à TR1R2 et TV1R2 sont redondantes avec les informations dont dispose déjà les moyens 20, mais ceci peut permettre d'affiner ces informations, par exemple par moyennage.

Selon ce mode de réalisation, lors de l'étape c, il n'y a avantageusement pas de transmission des moyens 24 aux moyens 22, puisque le but est de faire remonter toutes les informations vers les moyens 20 et pas vers les moyens 22.

Les durées TR2R1 et TR3R1 sont en principe proches ou égales aux durées TR1R2 et TR1R3 mesurées ou estimées en début de phase a), mais des différences peuvent exister liées aux incertitudes sur la mesure, d'où l'intérêt d'avoir une deuxième estimation lors de la phase c) qui permet d'affiner l'estimation de ces durées, par exemple par moyennage.

Comme déjà indiqué ci-dessus, c'est donc de préférence lors de la phase c) que l'information concernant TR2R3 est estimée ou mesurée puis transmise, par le signal 241, aux moyens 20.

La transmission du signal 221 aux moyens 24 permet donc, d'une part, d'envoyer l'information que détiennent ces moyens 22 vers les moyens 24 mais surtout de mesurer le temps de transit TR2R3.

La distance entre 22 et 24 peut ensuite être estimée ou calculée, par exemple par les moyens 20 après qu'ils aient reçu l'information TR2R3.

Le module 20 vérifie ensuite la validité et la cohérence des données transmises par les modules 22 et 24 et calcule les positions relatives des points de référence (modules 20,22 et 24), ainsi que les TDOA, ou différences de temps d'arrivée des signaux émis par les victimes qui permettent de positionner ces victimes par rapport aux points de référence (figure 6 : étape S4 ; figure 7A : étapes S18, S19, S20).

Les positions calculées sont ensuite affichées dans l'écran 26 (figures 2A, 2B).

Enfin, le sauveteur se déplace en fonction des positions calculées, et affichées, et éventuellement de l'état de santé des victimes.

Cette procédure de recherche est répétée périodiquement pour permettre une remise à jour suffisamment rapide des positions estimées au fil du déplacement du sauveteur. Cette remise à jour est également affichée, guidant ainsi le sauveteur. Le sauveteur peut, durant les phases a,b et c (ou une répétition de ces phases) rester immobile. Il peut également se déplacer pendant ces phases si son déplacement reste négligeable devant sa distance à la cible.

Dans le procédé décrit ci-dessus, il y a :

- émission d'un signal de référence par le premier module, et réception par chacun des deux autres modules de l'ALVA de recherche,
- puis réception, par tous les modules de recherche, des signaux émis par l'émetteur à localiser,
- et transmission, des deuxième et troisième modules, vers le premier module, d'une part des informations relatives au temps de parcours du signal de référence, et d'autre part, des informations reçues et estimées à partir des signaux reçus en provenance de l'émetteur à localiser.

Le premier module est de préférence le module 20 qui effectue les calculs de positions relatives et affiche ces positions à l'écran.

Cependant le premier module pourrait aussi être un des autres modules (par exemple le module 22), les informations à afficher étant ensuite transmises vers le module 20 muni d'un écran 26. De même les calculs de position relative pourraient être effectués par un autre module, tel que le module 22, le résultat des calculs pouvant être affiché par cet autre module ou, après transmission, par l'un quelconque des deux autres pour autant qu'il soit muni d'un écran.

La phase de resynchronisation des modules de référence (figure 9 : phase a) va être décrite plus en détail.

Dans l'état par défaut, les trois modules de référence sont connectés, mais seul le module 20 est actif et fonctionne en mode émission.

Lorsqu'une procédure de recherche est enclenchée, on active les modules 22 et 24 qui récupèrent un signal de synchronisation délivré par le module 20 et disponible par une connection physique classique.

La récupération de ce signal de synchronisation est destinée à fournir une référence de temps absolue et commune aux modules 22 et 24 même après désolidarisation du système.

Lorsque le signal de synchronisation est récupéré, le sauveteur désolidarise les modules 22 et 24 du module 20 et les place sur la zone d'investigation en prenant soin de les éloigner suffisamment l'un de l'autre pour permettre au système complet de jouir d'une bonne diversité spatiale.

Pour ce faire, et pour gagner un temps précieux, il pourra éventuellement jeter les modules 22 et 24.

Une fois désolidarisés du module 20 et placés de manière adéquate sur la zone à investiguer, les modules 22 et 24 se resynchronisent sur le module 20 (figure 7A : étape S10).

Celui-ci émet de manière périodique une séquence spécifique d'impulsions codées connue des modules 22 et 24. Cette séquence est universellement connue mais différente de celle utilisée pendant l'émission par défaut (réservée aux victimes), pour résister aux éventuels interférents ULB présents sur la scène (victimes). Par exemple le code qui détermine la position des impulsions émises est différent.

Une fenêtre d'écoute adéquate est donc ouverte par les modules 22 et 24, lors de cette phase de resynchronisation, et déplacée selon un motif précis de recherche (par exemple pour obtenir une recherche exhaustive) de manière à couvrir la gamme des distances plausibles entre le module 20 et les autres modules (typiquement de 0 à 30 m). La connaissance a priori de la séquence d'étalement utilisée à l'émission par le module 20 permet aux modules 22 et 24 d'augmenter le rapport signal à bruit du signal à exploiter, en particulier pour la synchronisation et la démodulation.

Chaque module peut, à cet effet, mettre en oeuvre des techniques telles que l'intégration cohérente des impulsions. Ces techniques peuvent par exemple être implantées par les moyens 31 de la figure 3.

Un filtre adapté à la forme de l'impulsion peut être utilisé, avant ou après l'intégration cohérente. Ce filtre peut par exemple correspondre à un traitement numérique intégré dans le bloc 31.

Le pic de corrélation obtenu en sortie de ce filtre adapté permet de déterminer l'instant d'arrivée du train d'impulsions émis par le module 20 par rapport à la référence de temps commune.

Avec la connaissance de la référence de synchronisation initiale avant désolidarisation, et de l'instant d'arrivée du signal transmis, après désolidarisation, par le module 20, les modules 22 et 24 sont en mesure de déterminer une nouvelle référence de temps (figure 7A : étape S11).

Cette resynchronisation permet une estimation de la distance relative en une passe (OWR pour One Way Ranging en langue anglaise). La transmission de la référence de synchronisation avant désolidarisation permet non seulement aux modules libres d'avoir une nouvelle référence de temps commune mais aussi de procéder à une estimation de la distance.

Enfin, cette phase de resynchronisation peut être renouvelée périodiquement de manière à compenser la dérive des horloges des modules 22 et 24 par rapport à l'horloge du module 20.

Une fois resynchronisés grâce au préambule de la trame (200) émise par le module 20 et après détection de la fin du préambule de cette trame (200), chaque module 22, 24 peut démoduler les données utiles de la trame transmise par le module 20 en se fondant sur la sortie de son propre corrélateur.

Ces données peuvent être relatives à l'avancement de la recherche, par exemple au nombre de victimes et aux positions estimées au rang précédent ou lors de la mise à jour précédente.

En ce qui concerne la phase de détection et d'identification des victimes (phase b), une fois la synchronisation stricte obtenue entre les 3 modules de référence, ces derniers procèdent à une écoute des signaux transmis par celle-ci, un certain temps préconvenu après la fin de l'émission du signal de resynchronisation de la phase a).

Le module 20, bascule alors en mode écoute, par exemple par bascule du commutateur 48 de la figure 3. Les modules 22 et 24 sont déjà en mode écoute. Tous les modules ouvrent des fenêtres d'observation en suivant des motifs de recherche communs, par exemple en menant une recherche exhaustive. La taille d'une fenêtre correspond à une différence de temps (correspondant à une gamme de distances).

La recherche est considérée comme achevée lorsqu'elle aura permis de balayer la gamme des distances usuelles observables (e.g. de 0 à quelques centaines de mètres, par exemple 500 m, autour de chaque module, cette distance étant fonction de plusieurs paramètres tels que l'épaisseur de neige au-dessus des victimes, et/ou la fréquence de fonctionnement, et/ou la qualité des récepteurs, et/ou la qualité des antennes).

Pour chaque position de la fenêtre d'observation, les séquences d'étalement utilisées par les modules ensevelis étant universelles, les modules de référence (20, 22, 24) procèdent à une estimation du canal en se fondant sur la connaissance de ces séquences.

Ils détectent ensuite l'ensemble des pics de corrélation au dessus d'un seuil fixé pour que la probabilité de fausses alarmes reste inférieure à une valeur fixée, raisonnable pour l'application.

Cette phase permet, au terme de la recherche et pour chaque module de référence, d'accéder directement à un nombre de victimes ensevelies.

Pour chaque pic de corrélation obtenu, on détermine ensuite le temps écoulé depuis la référence de temps absolue commune pour les différents modules du système (TOA pour Time Of Arrival en langue anglaise). En se basant sur ces nouveaux instants de synchronisation, les modules de référence 20,22,24 procèdent enfin à la démodulation des données transmises (dans le signal 131) après la détection de la fin des préambules de synchronisation.

Il s'agit dans cette nouvelle phase de récupérer pour chaque dispositif enseveli l'identifiant de la victime ainsi que, éventuellement, diverses données relatives à l'état physiologique de la victime (au cas où celle-ci porterait des capteurs pour mesurer des paramètres physiologiques transmis ensuite au dispositif 120 -figure 8- de la victime).

Dans la mesure où une seule séquence d'étalement est utilisée par les dispositifs ensevelis, des problèmes de collision peuvent nuire à la démodulation.

Aussi, deux points ensevelis situés à une même distance d'un des modules de référence donnent évidemment lieu à un seul pic de corrélation après estimation du canal, et peuvent provoquer une démodulation fantaisite des informations concernant les victimes (suivant les puissances relatives reçues des différents dispositifs ensevelis).

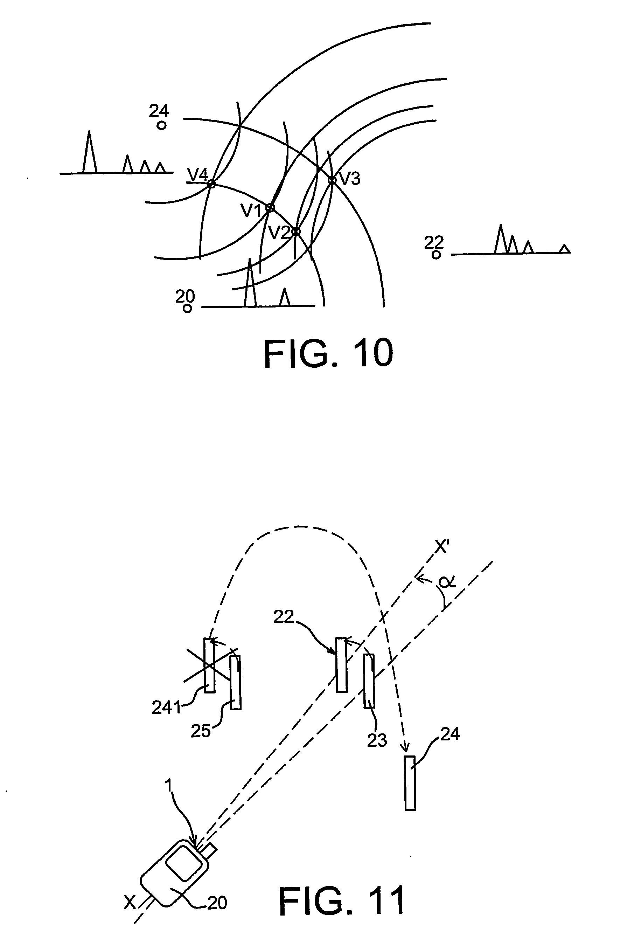

Cependant, comme illustré sur la figure 10, ce problème d'ambiguïté peut être facilement levé par tout autre module de référence a priori placé différemment du premier module de référence.

Un tel autre module détectera en effet deux pics de corrélation là où un seul pic est détecté dans le premier module : sur la figure 10, le récepteur 20 reçoit deux pics pour les quatre victimes V1-V4, dont trois sont disposées à égale distance de ce récepteur 20, tandis que, pour les mêmes victimes V1-V4 les récepteurs 22 et 24 recoivent chacun quatre pics.

Toutes ces informations sont utilisées lors de la phase de traitement pour localiser les victimes.

Deux points ensevelis collocalisés poseront également ce type de problèmes.

Dans la mesure où un code unique est utilisé par les victimes colocalisées, ce qui signifie le même code pour toutes les victimes, un pic de corrélation unique sera détecté mais il sera impossible de procéder à une démodulation fiable de l'information utile, et en particulier de l'identifiant, en raison de problèmes d'interférence synchrone.

Les moyens 20 affecteront alors un identifiant arbitraire à ces victimes collocalisées.

D'une manière générale, en tenant compte de la diversité spatiale dont jouit naturellement le système (non alignement des points de référence), si le consensus n'est pas obtenu entre les modules de référence concernant l'identification d'une ou plusieurs victimes ou sur les informations relatives à leur état physioloque, le système, et notamment les moyens 31 de calcul devant effectuer le calcul des positions, tiendra compte du plus grand nombre d'informations communes disponibles au niveau des 3 points de référence définis par les trois moyens 20,22,24.

De cette façon, et en réajustant les paramètres de l'algorithme de positionnement, en particulier le nombre de victimes, on règle ces cas difficiles.

Toutefois, de tels cas demeurent assez marginaux et rares, de par la résolution temporelle des signaux ULB, et ne remettent pas en cause le fonctionnement général du système.

Lors de la phase de retransmission des instants d'arrivée et de formation des différences de ces instants d'arrivée (phase c), les modules 22 et 24 retransmettent vers le module 20, un certain temps préconvenu après la fin de la recherche exhaustive et la démodulation des données, les données relatives aux victimes (identifiant, temps d'arrivée,...).

De préférence, cette transmission utilise des séquences d'étalement propres (séquence c) et intervient sur des plages de temps définies par le module 20 lors de la transmission du premier signal de référence (phase a), afin d'éviter toute interférence avec des signaux ULB présents sur la zone de recherche.

Le module central 20 procède alors à la formation des différences de temps d'arrivée (TDOA pour Time Difference Of Arrival en langue anglaise) et applique un algorithme capable de déterminer la position de tous les points de la scène (référence et points inconnus ensevelis) à partir de ces différences de temps.

Le porteur du module 20 peut alors s'aider de la représentation géométrique de la scène disponible sur l'écran pour orienter ses recherches (affichage de sa position et de celles des deux autres points de référence et des points inconnus).

Les trois phases (a, b et c) peuvent ensuite être répétées périodiquement pour permettre une réactualisation des positions estimées pendant le déplacement du module 20.

Au terme de la procédure décrite précédemment, le module de référence 20 dispose des données suivantes :

- Distances relatives entre les modules de référence : $\tilde{d}_{R1R2}$, $\tilde{d}_{R1R3}$, $\tilde{d}_{R2R3}$ à partir des temps de transit TR1R2, TR1R3,TR2R3, permettant un positionnement préalable des points de référence,
- Différences de distances relatives : $\tilde{d}_{V1R1}$-$\tilde{d}_{V1R2}$, $\tilde{d}_{V1R2}$-$\tilde{d}_{V1R3}$, $\tilde{d}_{V1R1}$-$\tilde{d}_{V1R3}$ à partir des temps de transit TV1R1, TV1R2,TV1R3, permettant de positionner la victime par rapport aux points de référence.

Des exemples d'algorithme de positionnement relatif des modules de référence sont décrits dans le document de J.Caffery et al. « Subscriber location in CDMA cellular networks », Vehicular Technology, IEEE Transactions, Vol. 47, May 1998, p.406-416.

En ce qui concerne le positionnement des victimes, on peut se fonder sur des mesures de TDOA.

Dans le cas du positionnement absolu d'un point inconnu dans un espace tridimentionnel, on utilise quatre points de référence, dont on connaît les positions absolues a priori. Malgré tout, on peut se contenter d'une approximation bidimensionnelle avec une recherche des victimes exclusivement dans un plan X-Y, ou plus précisément avec une projection des points dans le plan de la pente enneigée. Dans ce cas, trois points de référence permettent d'assurer l'unicité de la solution.

Or, selon la présente invention, on s'affranchit de toute référence fixe préalable et de toute connaissance a priori concernant les positions absolues des points de référence.

En réalité, puisque les coordonnées des points de référence sont inconnues, ces derniers peuvent être considérés comme des points mobiles inconnus pour une première étape.

Par défaut, et de manière arbitraire, on affecte la position (0,0) dans le plan (X,Y) à l'un des points de référence, de préférence un module fixe 22 ou 24 pour ne pas réactualiser le jeu complet de coordonnées lors du déplacement du module 20, ce qui permet d'éliminer un degré de liberté. On choisira par exemple comme position (0,0) le module 22 pour la suite.

Comme illustré sur la figure 11, deux degrés de liberté demeurent: une rotation possible du jeu de points en azimut (représenté par l'angle $\alpha$ sur la figure 11), et une symétrie autour d'un axe XX' passant par deux des modules 20,22 (figure 11). Aussi, par défaut, on pourra adopter, des conventions de positionnement concernant les points de référence afin d'obtenir une unique solution pour le placement de ces point de références.

Avantageusement, ces conventions permettront d'aboutir à une adéquation entre les positions affichées sur l'écran du module 20 et la réalité du terrain de manière à faciliter les déplacements du sauveteur.

On pourra par exemple choisir, au moment du déplacement des modules 22 et 24 à l'initiation de la procédure de recherche, de placer le module 22 devant le sauveteur (ie le module 20), et le module 23 systématiquement à sa droite, si cette même convention est utilisée à l'affichage sur le module 20 (avec un point 23 systématiquement à droite de l'axe 20,22).

Avantageusement, le sauveteur placera sur le terrain le module 22 dans la direction donnée par la direction affichée des points 20 et 22 sur l'écran de visualisation. De cette manière, son déplacement sur le terrain pourra en permanence se conformer avec le déplacement du point correspondant affiché sur l'écran.

L'unicité est donc récupérée de manière naturelle.

Il est à noter que cette méthode de récupération de l'unicité par respect des conventions de positionnement et ajustement visuel de l'azimut, n'affecte en rien la précision de positionnement relatif des points. Elle est seulement utile pour faciliter les déplacements du sauveteur.

En tout état de cause, c'est au sauveteur qu'incombe la responsabilité de se déplacer dans le système décrit (à l'aide de l'affichage). Aussi, ce déplacement pourra être géré en relatif, sans pour autant nuire à la précision du système.

Une fois le positionnement des points de référence effectué, il convient de procéder au calcul du positionnement des victimes potentielles.

En ce qui concerne le positionnement des victimes, tous les types d'algorithmes de positionnement à partir de mesures de différences de temps d'arrivée, ne nécessitant pas de contraintes particulières sur la position relative des points de référence, peuvent s'appliquer dans le cadre de la présente invention.

Des exemples sont données dans les documents intitulés « A simple and efficient estimator for hyperbolic location » de Y.T Chan et al., IEEE Transactions Acoustic, Speech and Signal Processing, Vol.42, Aug.1994, p. 1905-1915 et « An improved Taylor algorithm in TDOA subscriber position location » Proceding of the Int. Conf. on Communication Technology, 2003, Vol.2, 9-11 April 2003, p.981-984.

Contrairement à la phase précédente de positionnement des points de référence, pour laquelle le jeu des données était constitué de distances relatives, il est fait utilisation de différences de distances relatives.

A ce stade, on s'appuie sur des techniques telles que la linéarisation par développement en séries de Taylor ou l'algorithme de Chan, pour le positionnement d'un point à partir d'un jeu de TDOA (pour Time Difference Of Arrival en langue anglaise).

Selon un autre aspect de l'invention, tout sauveteur supplémentaire dépêché sur la zone et porteur d'un dispositif complet (un ensemble de trois émetteurs/récepteurs 20',22',24') doit de préférence être en mesure de participer à la procédure de recherche, même sans en être l'initiateur, soit en menant sa propre recherche autonome en parallèle du premier sauveteur, soit en apportant sa contribution à ce sauveteur en fournissant un quatrième point de référence.

Dans le premier cas, le deuxième ensemble est identique ou similaire au premier ensemble tel que décrit ci-dessus en liaison avec les figures 2A, 2B et 3. Il est représenté en présence du premier ensemble sur la figure 8B à l'état désolidarisé.

Dans le deuxième cas, le dispositif supplémentaire 20' intervient sans être accompagné de deux autres dispositifs 22', 24'. Il se joint alors aux 3 premiers dispositifs et se synchronise avec eux comme décrit ci-dessous.

Le dispositif ULB supplémentaire 20', ou le module ULB principal 20' de ce deuxième ensemble de dispositifs de recherche, passe dans un premier temps en mode réception et cherche alors à se synchroniser sur le signal de référence émis, pendant une des phases a' d'un cycle qui va être décrit ci-dessous, par le module principal 20 du premier dispositif, initiateur de la recherche.

Cette possibilité de synchronisation d'un quatrième émetteur/récepteur ou d'un deuxième ALVA justifie une fois de plus l'emploi d'une séquence d'étalement universelle pour la phase a'.

Une fois synchronisée, la référence de temps obtenue par le module 20' est alors une référence de temps relative.

En conséquence une procédure coopérative aller-retour (TWR pour Two Way Ranging en langue anglaise) peut donc être mise en oeuvre pour obtenir une synchronisation stricte des moyens 20' avec les moyens 20.

Une plage de temps supplémentaire est donc aménagée avant la phase b' de détection des victimes pour permettre à ce sauveteur supplémentaire de joindre le système et de contacter l'initiateur 20.

Un signal d'acquittement (ACK) peut être délivré par les moyens 20 à destination des moyens 20'. Ces derniers se trouvent alors confirmés dans leur adhésion au dispositif de recherche, et peuvent estimer la distance relative qui les séparent des moyens 20 grâce au double lien aller-retour.

On dispose alors d'une référence de temps absolue, commune avec les autres points de référence (20, 22, 24), permettant à tous les 4 modules de participer à la phase b' de recherche proprement dite.

Dès lors, 20' peut participer à cette nouvelle phase de recherche en tant que quatrième point de référence pour le premier dispositif initiateur et entame sa propre phase de détection des victimes, d'estimation des temps d'arrivée, avant de relayer cette information vers les moyens 20 (phases b' et c').

Malgré tout, cette nouvelle référence 20' est aussi à localiser dans le référenciel défini par (20, 22, 24).

Aussi, l'information de distance relative entre les moyens 20' et chacun des moyens 20,22,24 est déterminée avant de procéder au calcul des positions des victimes.

On peut par exemple exploiter (de la même façon que précédemment avec le cas mono-sauveteur), la retransmission, vers les moyens 20, des informations de temps d'arrivée pendant la phase c'.

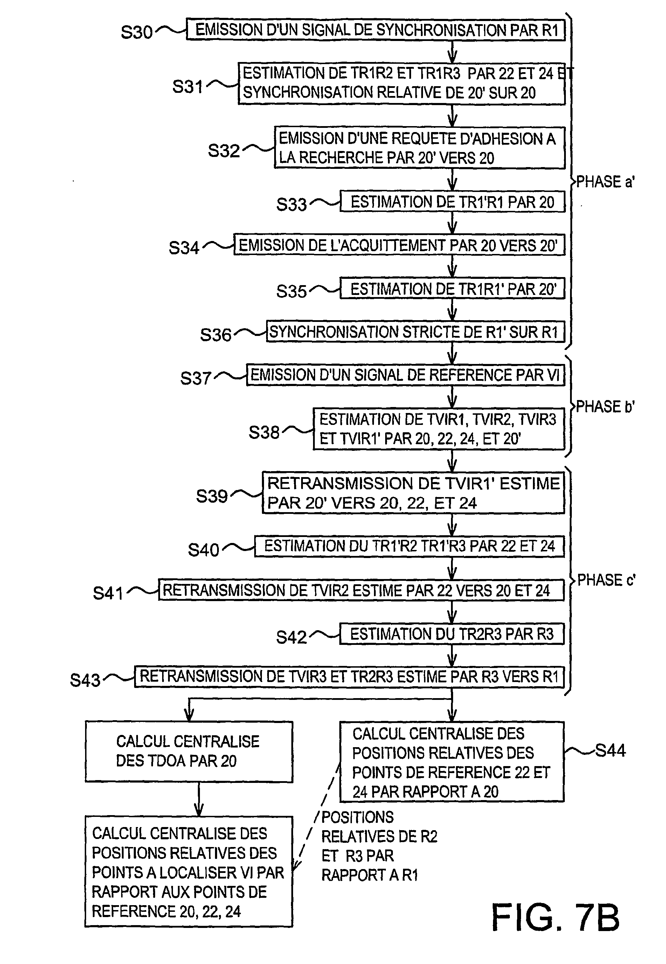

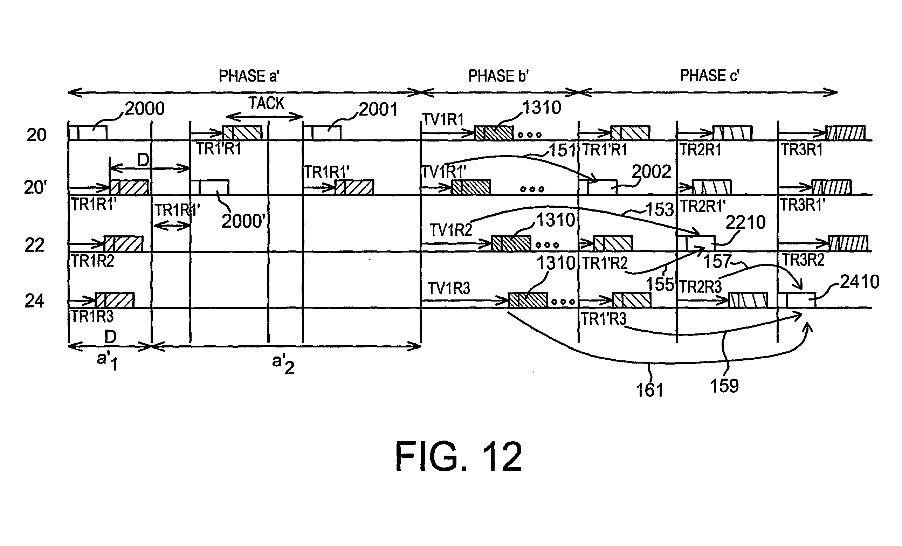

Une procédure mettant en oeuvre quatre émetteurs/récepteurs de recherche va être décrite en liaison avec les figures 7B et 12.

Pendant la phase a'1, un premier signal 2000 est émis par le module 20 (figure 7B : étape S30) et capté par les modules 22, 24 et 20' après, respectivement, une durée TR1R2, TR1R3 et TR1R1'(étape S31). Le protocole peut fixer une durée D pour cette phase a'1 à partir de l'émission du signal 2000.

Les moyens 22 et 24 peuvent alors estimer les durées TR1R2 et TR1R3.

A l'expiration de la durée D après l'émission du signal 2000, la phase a'2 débute. Cette phase correspond à une plage de temps autorisée pour l'adhésion d'un nouveau point de référence 20' et son acquittement par le module coordonateur 20.

Dans l'exemple donné, le dispositif 20'souhaite se joindre à la recherche coordonnée par 20. Or 20' ne connaît pas, même après avoir reçu le signal 2000, la référence temporelle de 20 (correspondant au début de l'émission de la trame 2000). Il ne connaît que l'instant d'arrivée de cette trame 2000. Il en déduit que la phase a'2 débute au plus tard un temps D après cet instant d'arrivée (cas qui correspondrait au cas où TR1R1' serait nul et les points 20 et 20' seraient confondus). Il sait donc qu'à l'instant correspondant à l'instant de réception de 2000+D, il peut émettre sa demande d'adhésion 2000'. Cet instant correspond également à l'instant de début effectif de la phase a'2 plus TR1R1' dans la référence temporelle du coordinateur (le délai de transit entre 20 et 20'), 20 reçoit cette demande d'adhésion 2000' au bout d'une durée TR1R1' après le début de l'émission de cette dernière et émet une trame d'acquittement 2001, une durée TACK après le début de la réception de 2000'. Cette durée TACK est fixée par le protocole et est donc connue en particulier par 20'. Elle est suffisamment courte pour limiter l'influence de la dérive relative des horloges de 20 et 20' et pour ainsi ne pas trop affecter l'estimation de la distance relative entre 20 et 20' ainsi que la resynchronisation stricte de 20' sur 20.

Le dispositif 20' reçoit la trame 2001 au bout d'une durée TR1R1' après son émission. Il peut alors estimer la durée écoulée entre l'émission de sa demande d'adhésion (signal 2000') et la réception de cet acquittement (signal 2001). Cette durée correspond à TACK + 2 TR1R1'. A partir de cette durée écoulée, il peut donc en déduire TR1R1'.

La synchronisation stricte des moyens 20' avec les moyens 20 est alors terminée (étape S36).

Au cours d'une phase b', chacun des quatre modules émetteurs/récepteurs du groupe de recherche peut capter un signal 1310 ou des signaux émis par le dispositif porté par une victime, et ce respectivement après une durée TV1R1, TV1R2, TV1R3 et TV1R1' par rapport à une référence de temps commune aux quatre modules, par exemple le début de la phase b' imposé par le protocole via le coordinateur 20. (étape S37). Chacun de ces dispositifs Ri peut donc estimer la durée TV1Ri (étape S 38).

Il y a ensuite synchronisation sur les temps d'arrivée de ce signal et démodulation des données transmises par la ou les victimes. Cette démodulation permet l'association, dans chaque module 20, 22, 24, 20', du temps d'arrivée du signal de la victime avec l'identifiant de la victime (étape S38).

Les informations relatives à la ou aux victimes peuvent alors être récupérées dans chacun des modules de recherches.

Ces informations (par exemple nombre des victimes, identifiant des victimes et temps d'arrivée des signaux associés) sont ensuite relayées, depuis les modules 22, 24 et 20' vers le module 20, sous forme de signaux 2002, 2210, 2410 (voir figure 12, phase c').

Le signal 2002 est émis par les moyens 20' et arrive dans les moyens 20, 22 et 24 respectivement après des durées, ou quatrième, cinquième et sixième temps de transit TR1'R1, TR1'R2, et TR1'R3 (figure 12, phase c' ; figure 7B : étape S39). TR1'R2 et TR1'R3 peuvent alors être estimés respectivement par les moyens 22, 24 (étape S40).

Sur la figure 12, la flèche 151 indique que la partie utile de la trame 2002 contient au moins l'information relative à TV1R1'.

De même, le signal 2210 est ensuite émis par les moyens 22 et arrive dans les moyens 20, 20' et 24 respectivement après des durées, ou septième, huitième et neuvième temps de transit TR2R1, TR2R1' et TR2R3.

Les flèches 153 et 155 indiquent que le signal 2210 contient au moins :

- d'une part les informations estimées par les moyens 22 lors de la phase b', donc en particulier TV1R2 (étape S41),
- d'autre part les informations utiles contenues dans le signal 2002 et reçues des moyens 20' lors de la première partie de l'étape c' par exemple TV1R1', ainsi que les informations estimées par 22 à partir de l'instant de réception de la trame 2002, par exemple TR1'R2.

Lors d'une dernière partie de la phase c', un signal 2410 est émis par les moyens 24 et capté par les modules 20,20' et 22 après, respectivement, une durée, ou dixième, onzième et douzième temps de transit TR3R1, TR3R1', TR3R2.

Sur la figure 12, les flèches 157, 159, 161 indiquent que ce signal 2410 comporte notamment les informations relatives à TR2R3, TR1'R3 et TV1R3 (étape S43).

Les durées TR1'R3 et TR3R1', de même que les durées TR2R3 et TR3R2, sont en principe identiques ou proches entre elles, mais des différences peuvent exister, liées aux incertitudes de mesure, d'où l'intérêt d'avoir une deuxième estimation lors de la phase c' qui permet d'affiner l'estimation de ces durées par exemple par moyennage.

Comme indiqué ci-dessus, c'est lors de la phase c' que l'information concernant TR2R3 est estimée ou mesurée puis transmise, par le signal 2410, aux moyens 20.

La transmission du signal 2210 au moyens 24 permet donc, d'une part, d'envoyer l'information que détiennent les moyens 22 vers les moyens 24 mais surtout de mesurer le temps de transit TR2R3.

La distance entre 22 et 24 peut ensuite être estimée ou calculée, par exemple par les moyens 20 après que ces derniers aient reçu l'information TR2R3.

Le module 20 peut ensuite vérifier la validité et la cohérence des données transmises par les modules 22, 24 et 20' et calculer les positions relatives des points de références 20,20',22 et 24, ainsi que les différences de temps d'arrivée des signaux émis par les victimes qui permettent de positionner ces victimes par rapport aux points de références (20,20',22,24).

Une extension au cas n sauveteurs pour ce mode de recherche conjoint (centralisé) peut être réalisée en utilisant' les techniques de synchronisation, d'accès au réseau et de partage des ressources temporelles (protocole) décrites ci-dessus à titre d'exemple pour le cas de deux sauveteurs.

L'apport d'un point de référence supplémentaire permet, d'une part, de réduire l'erreur sur les positions estimées des victimes en apportant de la redondance d'information concernant la conformité euclidienne de la structure, et, d'autre part, de réduire le temps de recherche avec l'intervention d'un sauveteur supplémentaire.

Mais le deuxième sauveteur ou le deuxième ensemble de détecteurs 20', 22', 24' peut tout aussi bien entamer une procédure de recherche complètement autonome en parallèle du premier ensemble 20, 22, 24 en utilisant, lors des phases a' et c', des séquences d'étalement différentes de la séquence utilisée par le premier ensemble (20,22,24), lors des phases a et c, afin de limiter les interférences entre les dispositifs de recherche fonctionnant en parallèle. On pourra bien sûr généraliser à N sauveteurs autonomes travaillant en parallèle.

On pourra pour cela définir des tables universelles de codes connues par tout sauveteur supplémentaire intervenant après le déclenchement d'une première procédure de recherche avec un ordre préférentiel. Dans le cas d'une scène étendue, compte tenu des grandes portées disponibles en ULB, toutes les victimes peuvent être détectées par chacun des points de référence (y compris par ceux des nouveaux sauveteurs), mais l'incertitude sur les positions estimées des victimes est d'autant plus grande que celles-ci sont éloignées des dispositifs de recherche dans un mode de recherche conjointe multi-sauveteurs (mode centralisé). Dès lors, le mode de recherche parallèle permet de réduire ces incertitudes en travaillant en parallèle sur plusieurs scènes de taille réduite.

Compte tenu du contexte de propagation envisagé (bande basse ou bande haute du spectre RF), il est tout à fait plausible d'envisager la présence du trajet géométrique direct, LOS (pour Line Of Sight en langue anglaise) de manière systématique. On peut donc négliger la présence de multi-trajets, en l'absence d'éléments ou d'obstacles réflecteurs dans l'environnement.

La neige est en effet un mélange composite de glace et d'air dont la partie réelle de la permittivité varie avec la pression de la neige (typiquement de 1.5 à 3). On observe qu'à une teneur en eau donnée, la partie réelle de la permittivité relative diminue et la partie imaginaire augmente avec la fréquence, ce qui traduit un accroissement des pertes. L'eau contenue dans la neige humide atténuera fortement l'onde et, ceci d'autant plus que la fréquence sera élevée.

Selon la période de l'année, on rencontrera tous les types de neige dans une avalanche mais, pour borner l'étude, on peut dissocier deux cas bien différents : neige sèche et neige humide, le cas le plus défavorable étant celui de la neige humide. On peut donc formuler deux hypothèses pour le bilan de la transmission suivant le type de neige rencontrée (sèche ou humide) et considérer le taux d'humidité correspondant $W_V$ (tableau I ci-dessous). La partie imaginaire de la permittivité (i.e. les pertes) est très faible si la neige est suffisamment sèche. La propagation d'une onde ULB émise dans la bande basse est donc très favorable dans la neige sèche et le système y fonctionne de façon optimale. En tout état de cause, un étalonnage préalable des dispositifs pour différentes conditions d'enneigement, et pour des distances connues, peut être réalisé.

Tableau I

| Atténuation subie par une onde à 1.25 GHz, et une transmission à travers 1,2, et 10 m de neige. | | | | | | |
|---|---|---|---|---|---|---|
| Type de neige | Sèche/Peu humide $W_V$=0,6 % | | | Humide $W_V$ = 3 % | | |
| Neige traversée (m) | 1m | 2m | 10m | 1m | 2m | 10m |
| Atténuation à 1,25GHz (dB) | 1 | 2 | 10 | 11 | 22 | 110 |

En réalité, les conditions de propagation sont meilleures à mesure que l'on descend en fréquence. Dans la mesure où l'on se place d'emblée dans une gamme de fréquences basses, le bilan de liaison est donc nettement favorable (seules les composantes fréquentielles émises les plus hautes sont susceptibles d'être fortement atténuées).

Même si, statistiquement, la profondeur moyenne d'ensevelissement est le plus souvent inférieure à 2m, occasionnant des pertes relativement faibles, il faut prendre en considération l'approximation plane de la zone à investiguer (les distances estimées sont vues dans un pseudo-plan défini par les dispositifs encadrant la zone).

Le plus souvent, une grande distance est potentiellement parcourue par l'onde dans le manteau neigeux. Typiquement, pour un module ULB de recherche porté par un sauveteur à une hauteur de 1.5 m, un module ULB enseveli à une profondeur de 1.5 m et une distance les séparant dans le plan X-Y de 10 m, la distance effectivement parcourue par l'onde sera de plus de 10 m. Enfin, il est à noter que seules les liaisons concernant le dispositif enseveli (du dispositif enseveli vers les points de référence) seront affectées par de telles atténuations, les autres liaisons (de points de référence vers les points de référence) étant assurées d'avoir lieu en espace libre. On pourra par exemple choisir d'ajuster la longueur du code d'intégration et donc ajuster la longueur du préambule de synchronisation, ou le débit utile dans la trame aux conditions météorologiques, de manière à compenser cette forte atténuation due à cette traversée du manteau neigeux

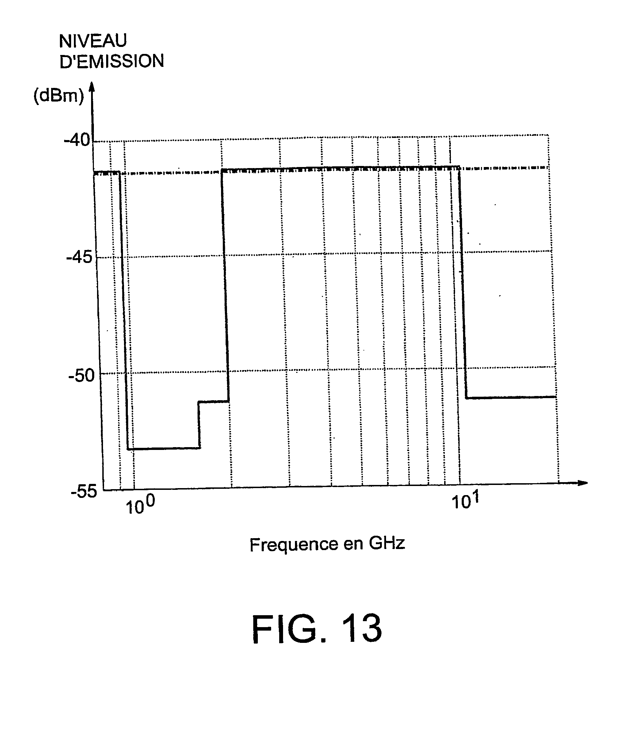

Un exemple d'application va être donné selon le dernier document de la FCC, pour les applications liées à la sécurité, du type imagerie radar et radar pénétrant opérant en dessous de 960 MHz, les règles générales de la FCC partie 15 s'appliquent. La figure 13 illustre un masque FCC pour les applications ULB extérieures.

Dans le cadre de notre application, si l'on considère une bande comprise entre 10 MHz et 960 MHz, soit une bande de 950 MHz de largeur de bande (Fc=475 MHz), la puissance moyenne autorisée est de :

$$P_m = 10Log(950) - 41,3 = -11,3 \text{ dBm}$$

Si l'on considère maintenant une liaison ULB à 10 kbits/s, le plancher du bruit thermique est alors de :

$$P_b = -174 + 10Log(10^4) = -134 \text{ dBm}.$$

Pour assurer un TEB (Taux d'Erreur Binaire) de $10^{-3}$ sur la liaison avec une modulation 2PPM, le rapport Eb/N0 est de 12,5 dB.

Les pertes dues aux défauts de l'implémentation matérielle sont estimées à 3 dB.

Le facteur de bruit du récepteur est estimé à 5 dB en considérant un récepteur bas coût dans cette bande (GSM # 1 à 2 dB).

Les antennes sont considérées comme omnidirectionnelles et possèdent un gain nul.

Dans cette configuration le système est capable de fonctionner pour une atténuation entre les antennes émission/réception de :

$$\text{Atténuation} = -11.3 - 12.5 - 3 - 5 - (-134) = 102,2 \text{ dB}$$

Si l'on considère une propagation en espace libre, l'atténuation est de :

$$\text{Atténuation} = 20Log(4.pi.d.Fc) - 20Log \ (C),$$

avec d la distance entre les antennes, Fc la fréquence centrale et C la vitesse de la lumière.

D'où

$$20Log(4.pi.d.Fc) = 102,2 + 20Log(C) = 271,7424$$

Ainsi la liaison décrite ci-dessus peut être assurée pour des portées atteignant jusqu'à d=6,47 Km si les conditions de propagation en espace libre sont respectées.

Ceci assure une portée suffisante, y compris en cas de mauvais temps entre les points de références et les terminaux des sauveteurs.

On considère maintenant le cas des liaisons radio ULB entre l'émetteur de la victime et les modules de référence 20, 22, 24, pour lesquelles une partie de la propagation s'effectue dans le manteau neigeux. Dans l'hypothèse la moins favorable, i.e. pour la fréquence la plus élevée de la bande occupée et une neige humide (Wv=5%), on ajoute un affaiblissement de 8,2 dB/m (f=1Ghz).

Typiquement, pour 3,65 m de neige traversée, les fréquences hautes de la bande occupée subissent un affaiblissement supplémentaire de 30 dB dû à la présence de neige humide, soit

$$\text{Atténuation}=102,2-30=72,2 \text{ dB}$$

$$20\text{Log}(4.\text{pi}.d.Fc)=241,7424$$

et une portée d=204,7 m

- Pour 5 m de neige humide, on ajoute donc 40 dB supplémentaire, d'où une portée de d=64,74 m,
- Pour 6 m de neige humide, on ajoute donc 50 dB supplémentaire, d'où une portée de d=20,47 m.

Pour ce dernier cas (6m de neige humide), il est possible que la liaison impliquant le dispositif ULB de la victime ne soit pas assurée (sous les hypothèses de modulation précédentes) ; il conviendra alors de balayer méthodiquement l'intégralité de la coulée pour entrer dans la zone de couverture, 20 m autour de la victime.

Il s'agit, en fait, d'un cas extrêmement défavorable pour lequel on dispose des données nécessaires aux calculs (notamment concernant la propagation dans le manteau neigeux), la fréquence centrale du dispositif pouvant être située autour de 475 MHz.

D'autre part, les avalanches de neige humide ne sont pas les plus meurtrières car leur déclenchement est plus facilement prévisible que les avalanches de plaques composées de neige beaucoup plus sèche.

Enfin, les calculs ont été menés pour assurer un taux d'erreur donné sur les données transmises, mais peuvent être dissociés de la phase de synchronisation et d'estimation de canal assurée par la seule détection du préambule.

En conséquence, il est possible d'ajuster la longueur de la séquence du préambule de synchronisation pour obtenir un gain d'intégration suffisant.

Selon l'invention, un seul et même dispositif portatif peut, sur demande, passer d'un statut de point inconnu à localiser (un point émetteur) à un statut d'infrastucture complète de recherche (trois points de référence émetteurs/récepteurs), par opposition à une approche classique où l'infrastucture est fixe une fois pour toutes.

La présente invention permet le positionnement relatif (par rapport au sauveteur) de multiples dispositifs ensevelis sous la neige en l'absence d'infrastructure (i.e. en l'absence de points de référence fixes dont les positions sont connues a priori).

Elle permet également le positionnement relatif (par rapport au sauveteur) de multiples dispositifs ensevelis sous la neige à partir d'un unique dispositif compact et polyvalent, fonctionnant indifféremment en mode de recherche (côté sauveteur), ou en mode d'alerte (côté victime)

Elle permet également le positionnement relatif rapide de multiples dispositifs ensevelis sous la neige, avec la suppression des trois phases de recherche de l'ARVA.

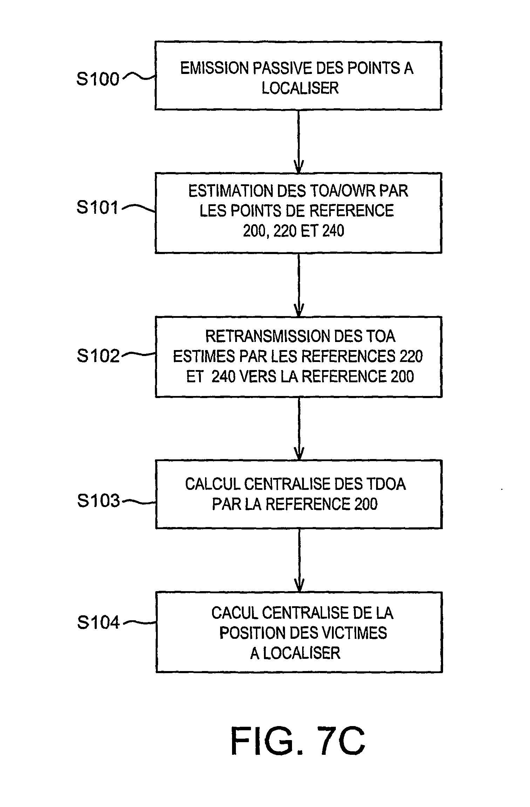

La figure 7C représente un procédé classique de radiolocalisation se fondant sur le TDOA tel que mis en oeuvre selon l'art antérieur. Un tel procédé suppose des points de référence 200, 220, 240 fixes dont les positions sont connues a priori. Ceci distingue d'ailleurs dès le départ ce procédé d'un procédé selon l'invention selon lequel les points de référence ne sont pas fixes et leur position n'est a priori pas connue.

Selon une première étape (S100), il y a d'abord émission passive depuis les points à localiser vers les points de référence.

Il est ensuite procédé à une estimation, par les points de référence 200, 220, 240, des temps d'arrivée des signaux émis pas les points à localiser.

Ces durées sont retransmises par les moyens 220 et 240 vers les moyens 200 (étape S102).

Un calcul centralisé des temps TDOA est ensuite effectué par les moyens 200 (étape S103).

Après le calcul des TDOA (différence des temps d'arrivée, ou « Time Différence Of Arrival »), les positions des points à localiser sont calculées (étape S104).

Ce procédé ne s'applique pas pour une scène occasionnelle et fortuite contrairement à l'invention.

Un dispositif compact selon l'invention permet également une synchronisation naturelle des modules ULB pour la phase de recherche, liée à la configuration du dispositif (ensemble solidaire de modules ULB dans l'état par défaut).

Enfin, l'invention est d'une grande souplesse de mise en oeuvre avec de nombreux modes de recherche envisageables, suivant les ressources disponibles en secours :

- recherche mono-sauveteur
- recherche multi-sauveteurs et, dans ce cas :

  - recherches conjointes (recherches centralisées),

- recherches parallèles (multiples recherches autonomes)

La précision est augmentée avec l'augmentation du nombre de sauveteurs,

Une visualisation de la scène complète, à l'aide de moyens 26 de visualisation (figure 2B) autorise un accès direct à la victime la plus proche par le chemin le plus court.

L'appareil peut être orienté de manière quelconque pendant les phases de recherche, par opposition à l'ARVA.

Avantageusement, l'appareil est orienté pour faire correspondre les points affichés sur l'écran de visualisation et la réalité du terrain afin de faciliter les déplacements du sauveteur.

Des perturbations électromagnétiques, liées aux interférences inter-victimes, peuvent être évitées là encore par opposition à l'ARVA.

Toute perturbations sonores sur la scène, en multi-sauveteurs, sont aussi évitées, le dispositif ne faisant pas intervenir de haut-parleur, à la différence de l'ARVA.

Toujours par opposition à l'ARVA, l'invention permet :

- une recherche des victimes sur des zones vastes grâce à la grande portée du dispositif,
- un affichage des informations utiles (Positions relatives, éventuelles informations sur l'état et le nombre de victimes),
- un maniement simple et intuitif, ne nécessitant pas de formation ni d'apprentissage particuliers,
- une classification éventuelle et un ordre de priorité pour le secours des victimes, selon divers critères tels que l'état de santé (Couplage potentiel avec DETAV).

Selon d'autres modes de réalisation, il est possible d'ajouter :

- un point supplémentaire de référence (i.e. un module émetteur/récepteur ULB supplémentaire par dispositif) permettant de procéder à une localisation tridimensionnelle des victimes, et donc de disposer d'une information supplémentaire concernant la profondeur d'ensevelissement de la victime,
- d'intégrer des modules GPS (pour un positionnement absolu et la synchronisation des points de référence) facilitant l'obtention de l'unicité des solutions,
- d'intégrer et de traiter des signaux ARVA classiques pour assurer une transition douce des matériels.

Un dispositif selon l'invention comporte des moyens de traitements des données (moyens 31 de la figure 3 par exemple) programmés pour mettre en oeuvre tout procédé selon l'invention.

Chacun des modules 20, 22, 24 d'un dispositif selon l'invention est muni de moyens 31 programmés pour mettre en oeuvre la réception, et/ou l'émission et/ou le traitement et/ou le transfert, de signaux ou d'informations ou de données vers l'un des, ou vers les, autres modules selon l'un des procédés décrits ci-dessus.

## Revendications

1. Procédé de localisation d'un émetteur ULB (120, 130), sans référence fixe préalable, à l'aide d'au moins n émetteurs/récepteurs ULB de recherche (20, 22, 24), n≥3, ce procédé comportant :

   A) une étape de synchronisation des émetteurs/récepteurs ULB de recherche, disposés en des points différents, et d'estimation de distances relatives de ces points,
   B) une étape de réception par les émetteurs/récepteurs, de signaux (121, 131) émis par l'émetteur à localiser,
   C) le calcul par les n émetteurs/récepteurs (20, 22, 24) respectivement de n durées entre le temps d'arrivée (TV1R1, TV1R2, TV1R3) de signaux (121, 131) émis par l'émetteur à localiser (120, 130), et une référence de temps commune,
   D) puis la transmission, vers l'un des émetteurs/récepteurs (20), de ces durées calculées, relatives aux signaux émis par l'émetteur à localiser (120, 130) et reçus par les autres émetteurs/récepteurs,
   E) une étape de calcul de la position relative, par rapport aux émetteurs/récepteurs de recherche, de l'émetteur à localiser en fonction des n durées calculées précédemment et des distances relative des émetteurs/récepteurs ULB de recherche.

2. Procédé selon la revendication 1, les signaux ULB utilisés étant de fréquence inférieure à 1 GHz.

3. Procédé selon l'une des revendications 1 ou 2, les trames d'impulsions transmises comportant un préambule de synchronisation, une délimitation du préambule, puis des données utiles.

**4.** Procédé selon l'une des revendications 1 à 3, comportant, avant l'étape A, une.étape de synchronisation des émetteurs/récepteurs de recherche dans un état groupé.

**5.** Procédé selon l'une des revendications 1 à 4, comportant, en outre, une étape d'affichage des points auxquels les émetteurs/récepteurs sont localisés et de l'émetteur /récepteur à localiser.

**6.** Procédé selon l'une des revendications 1 à 5, chaque émetteur/récepteur de recherche mettant en oeuvre, lors de l'étape B de réception, une ou plusieurs fenêtres d'observation correspondant chacune à une gamme de distances.

**7.** Procédé selon la revendication 6, l'ensemble des gammes de distance permettant de couvrir une gamme de distance comprise entre 0 et quelques centaines de mètres autour de chaque émetteur/récepteur.

**8.** Procédé selon l'une des revendications 1 à 7, comportant une étape de rafraîchissement, par répétition des étapes A,B,C, de la position de l'émetteur à localiser.

**9.** Procédé selon l'une des revendications 1 à 8, l'étape C de calcul de la position de l'émetteur à localiser fournissant une position dans une surface à deux dimensions.

**10.** Procédé selon l'une des revendications 1 à 9, dans lequel l'un des émetteurs/récepteurs est déplacé par rapport aux deux autres.

**11.** Procédé selon l'une des revendications 1 à 10, comportant :

- l'émission, par un premier émetteur/récepteur, d'un signal de référence, et la réception de ce signal de référence par les autres émetteurs/récepteurs,
- la réception, par les émetteurs/récepteurs de recherche, de signaux émis par l'émetteur à localiser,
- la transmission, vers le premier émetteur/récepteur, d'informations relatives aux temps d'arrivée du signal de référence et des signaux émis par l'émetteur à localiser.

**12.** Procédé selon l'une des revendications 1 à 11, l'étape A) de synchronisation comportant :

- l'émission d'un signal de référence (200) d'un premier émetteur/récepteur vers les autres émetteurs/récepteurs (22, 24),
- l'estimation ou le calcul, par ces autres émetteurs/récepteurs (22, 24) des temps de transit du signal de référence vers eux-mêmes (TR1R2, TR1R3).

**13.** Procédé selon l'une des revendications 1 à 12, comportant :

- la transmission, par un deuxième émetteur/récepteur (22) vers les autres émetteurs/récepteurs (20, 24), d'un signal (221) comportant au moins :
- la deuxième durée (TV1R2), calculée par le deuxième émetteur/récepteur,
- et le deuxième temps de transit du signal de référence (TR1R2),
- le calcul ou l'estimation, par un troisième émetteur/récepteur (24), d'un troisième temps de transit (TR2R3) du deuxième (22) au troisième (24) émetteur/récepteur, égal au temps de transit dudit signal (221) émis par le deuxième émetteur/récepteur.

**14.** Procédé selon la revendication 13, comportant en outre le calcul ou l'estimation, par le premier émetteur/récepteur (20), d'un temps de transit (TR2R1) du deuxième (22) au premier (20) émetteur/récepteur, égal au temps de transit dudit signal (221) émis par le deuxième émetteur/récepteur vers le premier émetteur/récepteur.

**15.** Procédé selon l'une des revendications 1 à 14, comportant :

- la transmission par le troisième émetteur/récepteur (24), vers au moins le premier émetteur/récepteur (20), d'un signal (241), comportant au moins :

• le troisième temps de transit (TR2R3) du deuxième (22) au troisième (24) émetteur/récepteur,
• la troisième durée (TV1R3), calculée par le troisième émetteur/récepteur,
• et le troisième temps de transit du signal de référence (TR1R3).

**16.** Procédé selon la revendication 15, comportant en outre le calcul ou l'estimation, par le premier émetteur/récepteur (20), d'un temps de transit (TR3R1) du troisième (24) au premier (20) émetteur/récepteur, égal au temps de transit dudit signal (241) émis par le troisième émetteur/récepteur vers le premier émetteur/récepteur.

**17.** Procédé selon l'une des revendications 1 à 10, dans lequel un émetteur/récepteur additionnel (20') est synchronisé avec les au moins trois émetteurs/récepteurs et positionné par rapport à ces au moins trois émetteurs/récepteurs.

**18.** Procédé selon la revendication 17, les émetteurs/récepteurs étant au nombre de trois, l'émetteur/récepteur additionnel étant un quatrième émetteur/récepteur.

**19.** Procédé selon la revendication 18, comportant :

- l'émission, par le premier émetteur/récepteur (20), d'un signal de référence (2000),
- la réception, par les 4 émetteurs/récepteurs de recherche, de signaux émis par l'émetteur/récepteur à localiser,
- la transmission, vers le premier émetteur/récepteur, d'informations relatives aux temps de transit du signal de référence et aux durées écoulées entre le temps d'arrivée des signaux émis par l'émetteur à localiser et une référence de temps commune aux quatre émetteurs/récepteurs.

**20.** Procédé selon la revendication 18 ou 19, l'étape A de synchronisation comportant :

- l'émission d'un premier signal de référence (2000) du premier émetteur/récepteur vers les deuxième, troisième et quatrième émetteurs/récepteurs (22, 24, 20'),
- l'estimation ou le calcul, par les deuxième et troisième émetteurs/récepteurs (22, 24) des temps de transit du signal de référence vers les deuxième et troisième émetteurs/récepteurs (TR1R2, TR1R3),
- la synchronisation du quatrième émetteur/récepteur avec le premier émetteur/récepteur, et l'estimation ou le calcul, par ce quatrième émetteur/récepteur du temps de transit (TR1R1') d'un signal entre le premier et le quatrième émetteur/récepteur.

**21.** Procédé selon la revendication 20, comportant en outre :

- l'émission, par le quatrième émetteur/récepteur, d'un signal de demande d'adhésion (2000'),
- puis l'émission, par le premier émetteur/récepteur, d'un signal d'acquittement (2001),
- le calcul, par le quatrième émetteur/récepteur, du temps de transit du signal d'acquittement du premier au quatrième émetteur/récepteur (TR1R1').

**22.** Procédé selon l'une des revendications 18 à 21, comportant, entre les étapes B et C :

- le calcul par les premier, deuxième, troisième et quatrième émetteurs/récepteurs (20, 22, 24, 20') respectivement d'une première, d'une deuxième, d'une troisième et d'une quatrième durées (TV1R1, TV1R2, TV1R3, TV1R1') entre les instants de réception par ces émetteurs/récepteurs de signaux émis par l'émetteur à localiser, et une référence de temps commune aux quatre émetteurs/récepteurs,
- puis la transmission, vers le premier émetteur/récepteur (20), de ces deuxième, troisième et quatrième durées calculées.

**23.** Procédé selon la revendication 22, comportant :

- la transmission, par le quatrième émetteur/récepteur (20') vers les premier, deuxième et troisième émetteurs/récepteurs (20, 22, 24), d'un signal (2002) comportant au moins la quatrième durée (TV1R1') calculée,
- le calcul ou l'estimation, par le premier, le deuxième, et le troisième émetteur/récepteur (20, 22, 24), respectivement d'un quatrième, cinquième et sixième temps de transit (TR1'R1, TR1'R2, TR1'R3) du quatrième émetteur/récepteur aux premier (20), deuxième (22) et troisième (24) émetteurs/récepteurs, égal au temps de transit dudit signal (2002) émis par le quatrième émetteur/récepteur.

**24.** Procédé selon la revendication 23, comportant :

- la transmission, par le deuxième émetteur/récepteur (22) vers les premier, troisième et quatrième émetteurs/récepteurs (20, 24, 20'), d'un signal (2210) comportant au moins :

      • la deuxième durée (TV1R2) calculée par le signal émetteur/récepteur,

      • et le cinquième temps de transit (TR1'R2),

- le calcul ou l'estimation, par le premier, le troisième et le quatrième émetteur/récepteur (20, 24, 20'), respectivement d'un septième, huitième, neuvième temps de transit (TR2R1, TR2R1', et TR2R3) du deuxième émetteur/récepteur (22) respectivement au premier, quatrième et troisième (24) émetteur/récepteur, égal au temps de transit dudit signal (2210) émis par le deuxième émetteur/récepteur vers chacun des premier, troisième et quatrième émetteur/récepteur (20, 24, 20').

**25.** Procédé selon la revendication 24, comportant :

- la transmission, par le troisième émetteur/récepteur (24) vers les premier, deuxième et quatrième émetteurs/récepteurs (20, 22, 20'), d'un signal (2410) comportant au moins :

      • la troisième durée (TV1R3) calculée par le troisième émetteur/récepteur,
      • le sixième temps de transit (TR1'R3),
      • et le neuvième temps de transit (TR2R3),

- le calcul ou l'estimation, par le premier, le deuxième et le quatrième émetteur/récepteur (20, 22, 20'), respectivement d'un dixième, onzième, douzième temps de transit (TR3R1, TR3R1', et TR3R2) du troisième émetteur/récepteur (22) respectivement au premier, quatrième et deuxième émetteur/récepteur, égal au temps de transit dudit signal (2410) émis par le troisième émetteur/récepteur vers chacun des premier, quatrième et deuxième émetteurs/récepteurs (20, 22, 20').

**26.** Procédé selon l'une des revendications 18 à 25, les 3 émetteurs/récepteurs formant un premier ensemble, le quatrième émetteur/récepteur fait partie d'un deuxième ensemble de trois émetteurs/récepteurs.

**27.** Procédé selon l'une des revendications 1 à 19, les 3 émetteurs/récepteurs formant un premier ensemble, un deuxième ensemble d'au moins trois émetteurs/récepteurs mettant en oeuvre les étapes A) - E) en parallèle au, ou de manière indépendante par rapport au, premier ensemble.

**28.** Procédé selon l'une des revendications 1 à 27, dans lequel l'émetteur/récepteur à localiser est enseveli sous de la neige.

**29.** Procédé selon la revendication 28, dans lequel, lors de l'étape E, une correction est effectuée pour tenir compte de retards dans les temps d'arrivée dus à la propagation des.signaux dans la neige.

**30.** Procédé selon l'une des revendications 1 à 29, dans lequel les émetteurs/récepteurs utilisent en émission, à défaut, des séquences d'étalement identiques.

**31.** Dispositif de localisation d'un émetteur/récepteur ULB, comportant :

- au moins 3 émetteurs/récepteurs de recherche, comportant chacun des moyens émetteurs/récepteurs de signaux ULB,
- les émetteurs/récepteurs de recherche étant groupés en position de repos et aptes à être désolidarisés lors d'une localisation d'un émetteur/récepteur ULB,
- des moyens pour synchroniser les émetteurs/récepteurs de recherche à l'état groupé,
- des moyens pour synchroniser les émetteurs/récepteurs de recherche à l'état désolidarisé, et pour estimer les distances relatives de ces émetteurs/récepteur lorsqu'ils sont disposés en des points différents,
- des moyens pour calculer n durées entre un temps d'arrivée d'un signal émis par un émetteur à localiser, et une référence de temps commune,
- des moyens (31) pour calculer, sans point de référence préalablement fixé, la position d'un émetteur à localiser en fonction des temps de parcours de signaux, émis par cet émetteur à localiser, vers les émetteurs/récepteurs de recherche, des n durées calculées et des distances relatives estimées de ces émetteurs/récepteur,
- des moyens (26) de visualisation pour indiquer au moins la position de l'émetteur à localiser par rapport à celle des émetteurs/récepteurs de recherche.

**32.** Dispositif selon la revendication 31, les moyens (31) pour calculer la position d'un émetteur/récepteur à localiser et les moyens de visualisation faisant partie d'un des émetteurs/récepteurs de recherche.

33. Dispositif de localisation d'un émetteur/récepteur ULB, comportant au moins 3 émetteurs/récepteurs de recherche, programmés pour mettre en oeuvre un procédé selon l'une des revendications 1 à 29.

34. Dispositif selon l'une des revendications 31 à 33, **caractérisé en ce qu'**il est réalisé en technologie CMOS ou BiCMOS.

**Claims**

1. Method for locating a UWB transmitter (120, 130), without a previously-set reference, using at least one first set of at least n UWB searching transceivers (20, 22, 24), $n \geq 3$, said method comprising:

   A) a step of synchronising the UWB searching transceivers, arranged at different points, and of estimating the relative distance between these points,
   B) a step of receiving, by the transceivers, signals (121, 131) transmitted by the transmitter to be located,
   C) the calculation, by the n transceivers (20, 22, 24), respectively, of n durations between the arrival time (TV1R1, TV1R2, TV1R3) of signals (121, 131) transmitted by the transmitter to be located (120, 130), and a common reference time,
   D) then, the transmission, to one of the transceivers (20), of these durations calculated, relating to the signals transmitted by the transmitter to be located (120, 130) and received by the other transceivers,
   E) a step of calculating the relative position, with respect to the searching transceivers, of the transmitter to be located according to the n calculated durations and of the relative distances of said UWB searching transceivers.

2. Method according to claim 1, the UWB signals used having a frequency of less than 1 GHz.

3. Method according to one of claims 1 or 2, the pulse frames transmitted comprising a synchronisation preamble, a delimitation of the preamble, then useful data.

4. Method according to any one of claims 1 to 3, comprising, before step A, a step of synchronising the searching transceivers in an attached state.

5. Method according to any one of claims 1 to 4, also comprising a step of displaying the points at which the transceivers are located and the transceiver to be located.

6. Method according to any one of claims 1 to 5, each searching transceiver implementing, in the receiving step B, one or more observation windows each corresponding to a range of distances.

7. Method according to claim 6, all of the distance ranges enabling a distance range between 0 and a few hundred metres around each transceiver to be covered.

8. Method according to one of claims 1 to 7, comprising a step of refreshing, by a repetition of steps A, B and C, the position of the transceiver to be located.

9. Method according to one of claims 1 to 8, step C for calculating the position of the transceiver to be located providing a position in a two-dimensional surface.

10. Method according to one of claims 1 to 9, wherein one of the transceivers is moved with respect to the other two.

11. Method according to one of claims 1 to 10, comprising:

    - the transmission, by a first transceiver, of a reference signal, and the reception of said reference signal by the other transceivers,
    - the reception, by the searching transceivers, of signals transmitted by the transmitter to be located,
    - the transmission, to the first transceiver, of information relating to the times of arrival of the reference signal and the signals transmitted by the transmitter to be located.

**12.** Method according to one of claims 1 to 11, the synchronisation step A comprising:

- the transmission of a reference signal (200) from the first transceiver to the other transceivers (22, 24),
- the estimation or the calculation, by said other transceivers (22, 24), of the transit times of the reference signal to themselves (TR1R2, TR1R3).

**13.** Method according to any of claims 1 to 12, comprising:

- the transmission, by a second transceiver to the other transceivers (20, 24), of a signal (221) comprising at least:
- the second duration (TV1R2), calculated by the second transceiver,
- and the second transit time of the reference signal (TR1R2),
- the calculation or the estimation, by a third transceiver (24), of a third transit time (TR2R3) from the second transceiver (22) to the third transceiver (24), equal to the transit time of said signal (221) transmitted by the second transceiver.

**14.** Method according to claim 13, also comprising the calculation or the estimation, by the first transceiver (20), of a transit time (TR2R1) from the second transceiver (22) to the first transceiver (20), equal to the transit time of said signal (221) transmitted by the second transceiver to the first transceiver.

**15.** Method according to one of claims 1 to 14, comprising:

- the transmission by the third transceiver (24), to at least the first transceiver (20), of a signal (241), comprising at least:

  • the third transit time (TR2R3) from the second transceiver (22) to the third transceiver (24),
  • the third duration (TV1R3) calculated by the third transceiver,
  • and the third transit time of the reference signal (TR1R3).

**16.** Method according to claim 15, also comprising the calculation or the estimation, by the first transceiver (20), of a transit time (TR3R1) from the third transceiver (24) to the first transceiver (20), equal to the transit time of said signal (241) transmitted by the third transceiver to the first transceiver.

**17.** Method according to any of claims 1 to 10, an additional transceiver (20') being synchronised with the first set of at least three transceivers and positioned with respect to said at least three transceivers.

**18.** Method according to claim 17, wherein the first set of transceivers consists of three transceivers, and the additional transceiver is a fourth transceiver.

**19.** Method according to claim 18, comprising:

- the transmission, by the first transceiver (20), of a reference signal (2000),
- the reception, by the four searching transceivers, of signals transmitted by the transceiver to be located,
- the transmission, to the first transceiver, of information relating to the transit time of the reference signal and to the times that have passed between the arrival time of the signals transmitted by the transmitter to be located and a reference time common to the four transceivers.

**20.** Method according to claim 18 or 19, the synchronisation step A comprising:

- the transmission of a first reference signal (2000) from the first transceiver to the second, third and fourth transceivers (22, 24, 20'),
- the estimation or the calculation, by the second and third transceivers (22, 24), of the transit times of the reference signal to the second and third transceivers (TR1R2, TR1R3),
- the synchronisation of the fourth transceiver with the first transceiver, and the estimation or the calculation, by said fourth transceiver, of the transit time (TR1R1') of a signal between the first and the fourth transceivers.

**21.** Method according to claim 20, also comprising:

- the transmission, by the fourth transceiver, of an adherence request signal (2000'),

- then, the transmission, by the first transceiver, of an acknowledgement signal (2001),
- the calculation, by the fourth transceiver, of the transit time of the acknowledgement signal from the first transceiver to the fourth transceiver (TR1R1').

**22.** Method according to one of claims 18 to 21, comprising, between steps B and C:

- the calculation by the first, second, third and fourth transceivers (20, 22, 24, 20'), respectively, of a first, a second, a third and a fourth duration (TV1R1, TV1R2, TV1R3, TV1R1') between the times of reception by said transceivers of signals transmitted by the transmitter to be located, and a reference time common to the four transceivers,
- then, the transmission, to the first transceiver (20), of said second, third and fourth calculated durations.

**23.** Method according to claim 22, comprising:

- the transmission, by the fourth transceiver (20') to the first, second and third transceivers (20, 22, 24), of a signal (2002) comprising at least the fourth calculated duration (TV1R1'),
- the calculation or the estimation, by the first, second and third transceiver (20, 22, 24), respectively, of a fourth, fifth and sixth transit time (TR1'R1, TR1'R2, TR1'R3) from the fourth transceiver to the first (20), second (22) and third (24) transceivers, equal to the transit time of said signal (2002) transmitted by the fourth transceiver.

**24.** Method according to claim 23, comprising:

- the transmission, by the second transceiver (22) to the first, third and fourth transceivers (20, 24, 20'), of a signal (2210) comprising at least:

  • the second duration (TV1R2) calculated by the transceiver signal,
  • and the fifth transit time (TR1'R2),

- the calculation or the estimation, by the first, third and fourth transceivers (20, 24, 20'), respectively, of a seventh, eighth, and ninth transit time (TR2R1, TR2R1', TR2R3) from the second transceiver (22), respectively, to the first, fourth and third transceivers (24), equal to the transit time of said signal (2210) transmitted by the second transceiver to each of the first, third and fourth transceivers (20, 24, 20').

**25.** Method according to claim 24, comprising:

- the transmission, by the third transceiver (24) to the first, second and fourth transceivers (20, 22, 20'), of a signal comprising at least:

  • the third duration (TV1R3) calculated by the third transceiver,
  • the sixth transit time (TR1'R3),
  • and the ninth transit time (TR2R3),

- the calculation or the estimation, by the first, second and fourth transceivers (20, 22, 20'), respectively, of a tenth, eleventh, and twelfth transit time (TR3R1, TR3R1', TR3R2) from the third transceiver (22), respectively, to the first, fourth and second transceivers, equal to the transit time of said signal (2410) transmitted by the third transceiver to each of the first, fourth and second transceivers (20, 22, 20').

**26.** Method according to any one of claims 18 to 25, the three transceivers forming a first set of three transceivers, the fourth transceivers being part of a second set of three transceivers.

**27.** Method according to anyone of claims 1 to 19, said 3 transceivers forming a first set, a second set of at least three transceivers implementing steps A through E in parallel with, or independently of, the first set.

**28.** Method according to one of claims 1 to 27, the transceiver to be located being buried under the snow.

**29.** Method according to claim 28, wherein, in step E, a correction is made in order to take into account delays in the times of arrival due to the propagation of signals in the snow.

**30.** Method according to one of claims 1 to 29, wherein the transceivers use, in the transmission, by default, identical spreading sequences.

**31.** Device for locating a UWB transceiver, comprising:

- at least three searching transceivers, each comprising UWB signal transceiver means,
- the searching transceivers being attached in the resting position and capable of being detached during a location operation of a UWB transceiver,
- means for synchronising the searching transceivers when they are detached, and of estimating the relative distances of these transceivers when arranged at different points,
- means for calculating n durations between the arrival time of a signal transmitted by the transmitter to be located and a common reference time,
- means (31) for calculating, without a previously-set reference point, the position of a transmitter to be located according to the times of travel of signals, transmitted by said transmitter to be located, to the searching transceivers, of said n calculated durations and of estimated relative distances of said transmitters
- display means (26) for indicating at least the position of the transmitter to be located with respect to that of the searching transceivers.

**32.** Device according to claim 31, the means (31) for calculating the position of a transceiver to be located and the display means being part of one of the transceivers.

**33.** Device for locating a UWB transceiver, comprising at least three searching transceivers, programmed to implement a method according to claim 1 to 29.

**34.** Device according to one of claims 31 to 33, wherein it is produced with CMOS or BiCMOS technology.

**Patentansprüche**

**1.** Verfahren zur Ortung eines UWB-Senders (120, 130) ohne vorherigen Bezugspunkt mit Hilfe von wenigstens n UWB-Suchsendern/-empfängern (20, 22, 24), n≥3, wobei dieses Verfahren umfasst:

A) einen Schritt zur Synchronisierung der in verschiedenen Punkten angeordneten UWB-Suchsender/-empfänger und zur Schätzung der Relativabstände dieser Punkte,
B) einen Empfangsschritt der durch den zu ortenden Sender gesendeten Signale (121, 131) durch die Sender/Empfänger,
C) die Berechnung - durch die n Sender/Empfänger (20, 22, 24) - von n Zeitdauern zwischen der Ankunftszeit (TV1R1, TV1R2, TV1R3) von Signalen (121, 131), gesendet von dem zu ortenden Sender (120, 130), und einer gemeinsamen Referenzzeit,
D) dann die Übertragung dieser berechneten, die durch den zu ortenden Sender (120, 130) gesendeten und durch die anderen Sender/Empfänger empfangenen Signale betreffenden Zeitdauern zu einem der Sender/Empfänger (20),
E) einen Schritt zur Berechnung der Relativposition des in Abhängigkeit von den n vorhergehend berechneten Zeitdauern und von den Relativabständen der UWB-Suchsender/-empfänger zu ortenden Senders in Bezug auf die Suchsender/-empfänger.

**2.** Verfahren nach Anspruch 1, wobei die Frequenz der benutzten UWB-Signale niedriger als 1 GHz ist.

**3.** Verfahren nach einem der Ansprüche 1 oder 2, wobei die übertragenen Impulsblöcke eine Synchronisationspräambel, eine Präambelabgrenzung, sodann die Nutzdaten umfassen.

**4.** Verfahren nach einem der Ansprüche 1 bis 3, vor dem Schritt A einen Schritt zur Synchronisierung der Suchsender/-empfänger in einem zusammengeschalteten Zustand umfassend.

**5.** Verfahren nach einem der Ansprüche 1 bis 4, mit außerdem einem Schritt zur Anzeige der Punkte in denen die Sender/Empfänger lokalisiert sind und des zu ortenden Senders/Empfängers.

**6.** Verfahren nach einem der Ansprüche 1 bis 5, wobei jeder Suchsender/-empfänger im Empfangsschritt B ein oder mehrere Beobachtungsfenster benutzt, von denen jedes einem Abstandsbereich entspricht.

7. Verfahren nach Anspruch 6, wobei die Gesamtheit der Abstandsbereiche ermöglicht, um jeden Sender/Empfänger herum einen zwischen 0 und einigen hundert Metern enthaltenen Bereich abzudecken.

8. Verfahren nach einem der Ansprüche 1 bis 7, mit einem Schritt zur Auffrischung der Position des zu ortenden Senders durch Wiederholung der Schritte A,B,C.

9. Verfahren nach einem der Ansprüche 1 bis 8, wobei der Schritt C zur Berechnung der Position des zu ortenden Senders eine Position in einer zweidimensionalen Fläche liefert.

10. Verfahren nach einem der Ansprüche 1 bis 9, wobei einer der Sender/Empfänger in Bezug auf den anderen verschoben wird.

11. Verfahren nach einem der Ansprüche 1 bis 10, umfassend:

   - die Aussendung eines Referenzsignales durch einen ersten Sender/Empfänger und den Empfang dieses Referenzsignals durch die anderen Sender/Empfänger,
   - den Empfang von durch den zu ortenden Sender gesendeten Signalen durch die Suchsender/-empfänger,
   - die Übertragung - zum ersten Sender/Empfänger -, von Informationen bezüglich der Ankunftszeiten des Referenzsignals und der durch den zu ortenden Sender gesendeten Signale.

12. Verfahren nach einem der Ansprüche 1 bis 11, wobei der Synchronisierungsschritt A) umfasst:

   - die Sendung eines Referenzsignals (200) eines ersten Senders/Empfängers zu den andern Sendern/Empfängern (22, 24),
   - die Schätzung oder Berechnung - durch diese anderen Sender/Empfänger (22, 24) -, der Transitzeiten des Referenzsignals zu ihnen selbst (TR1R2, TR1R3).

13. Verfahren nach einem der Ansprüche 1 bis 12, umfassend:

   - die Übertragung - durch einen zweiten Sender/Empfänger (22) zu den anderen Sendern/Empfängern (20, 24) -, eines Signals (221), wenigstens umfassend:
   - die zweite Zeitdauer (TV1 R2), berechnet durch den zweiten Sender/Empfänger,
   - und die zweite Transitzeit des Referenzsignals (TR1R2),
   - die Berechnung oder Schätzung - durch einen dritten Sender/Empfänger (24) -, einer dritten Transitzeit (TR2R3) des zweiten (22) zum dritten (24) Sender/Empfänger gleich der Transitzeit des durch den zweiten Sender/Empfänger gesendeten genannten Signals (221).

14. Verfahren nach Anspruch 13, umfassend außerdem die Berechnung oder Schätzung - durch den ersten Sender/Empfänger (20) -, einer Transitzeit (TR2R1) des zweiten (22) zum ersten (20) Sender/Empfänger gleich der Transitzeit des durch den zweiten Sender/Empfänger zum ersten Sender/Empfänger gesendeten genannten Signals (221).

15. Verfahren nach einem der Ansprüche 1 bis 14, umfassend:

   - die Übertragung - durch den dritten Sender/Empfänger (24) zu wenigstens dem ersten Sender/Empfänger (20) -, eines Signals, umfassend:

      • die dritte Transitzeit (TR2R3) des zweiten (22) zum dritten (24) Sender/Empfänger,
      • die dritte Zeitdauer (TV1 R3), berechnet durch den dritten Sender/Empfänger,
      • und die dritte Transitzeit des Referenzsignals (TR1R3).

16. Verfahren nach Anspruch 15, umfassend außerdem die Berechnung oder Schätzung - durch den ersten Sender/Empfänger (20) -, einer Transitzeit (TR3R1) vom dritten (24) zum ersten (20) Sender/Empfänger gleich der Transitzeit des durch den dritten Sender/Empfänger zum ersten Sender/Empfänger gesendeten genannten Signals (241).

17. Verfahren nach einem der Ansprüche 1 bis 10, bei dem ein Zusatzsender/-empfänger (20') mit den wenigstens drei Sendern/Empfängern synchronisiert und in Bezug auf diese wenigstens drei Sender/Empfänger positioniert ist.

18. Verfahren nach Anspruch 17, wobei die Sender/Empfänger drei an der Zahl sind und der Zusatzsender/-empfänger ein vierter Sender/Empfänger ist.

19. Verfahren nach Anspruch 18, umfassend:

- die Aussendung eines Referenzsignals (2000) durch einen ersten Sender/Empfänger (20),
- den Empfang von durch den zu ortenden Sender gesendeten Signalen durch die vier Suchsender/-empfänger,,
- die Übertragung - zum ersten Sender/Empfänger -, von Informationen bezüglich der Transitzeiten des Referenzsignals und der zwischen der Ankunftszeit der durch den zu ortenden Sender gesendeten Signale und einer den vier Sendern/Empfängern gemeinsamen Referenzzeit verflossenen Zeit.

20. Verfahren nach Anspruch 18 oder 19, wobei der Synchronisationsschritt A umfasst:

- die Aussendung eines ersten Referenzsignals (2000) des ersten Senders/Empfängers zum zweiten, dritten und vierten Sender/Empfänger (22, 24, 20'),
- die Schätzung oder die Berechnung - durch den zweiten und den dritten Sender/Empfänger (22, 24) -, der Transitzeiten des Referenzsignals zum zweiten und zum dritten Sender/Empfänger (TR1R2, TR1 R3),
- die Synchronisierung des vierten Senders/Empfängers mit dem ersten Sender/Empfänger und die Schätzung oder die Berechnung der Transitzeit (TR1R1') eines Signals zwischen dem ersten und dem vierten Sender/ Empfänger durch diesen vierten Sender/Empfänger.

21. Verfahren nach Anspruch 20, außerdem umfassend:

- die Aussendung eines Beitrittantragssignals (2000'), durch den vierten Sender/Empfägner,
- dann die Aussendung eines Bestätigungssignals (2001) durch den ersten Sender/Empfänger,
- die Berechnung - durch den vierten Sender/Empfänger -, der Transitzeit des Bestätigungssignals des ersten zum vierten Sender/Empfänger (TR1R1').

22. Verfahren nach einem der Ansprüche 18 bis 21, umfassend - zwischen den Schritten B und C:

- die Berechnung - durch den ersten, zweiten, dritten und vierten Sender/Empfänger (20, 22, 24, 20') -, von jeweils einer ersten, einer zweiten, einer dritten und einer vierten Zeitdauer (TV1R1, TV1R2, TV1R3, TV1R1') zwischen den Empfangszeitpunkten von durch den zu ortenden Sender gesendeten Signalen durch diese Sender/Empfänger und einer allen vier Sendern/Empfängern gemeinsamen Zeitreferenz,
- dann die Übertragung dieser zweiten, dritten und vierten berechneten Zeitdauern zum ersten Sender/Empfänger (20).

23. Verfahren nach Anspruch 22, umfassend:

- die Übertragung - durch den vierten Sender/Empfänger (20') zum ersten, zweiten und dritten Sender/Empfänger (20, 22, 24) -, eines wenigstens die vierte berechnete Zeitdauer (TV1R1') umfassenden Signals,
- die Berechnung oder Schätzung - durch den ersten, den zweiten und den dritten Sender/Empfänger (20, 22, 24) -, von jeweils eine vierten, fünften und sechsten Transitzeit (TR1'R1), TR1'R2, TR1'R3) des vierten Senders/ Empfängers zum ersten (20), zweiten (22) und dritten (24) Sender/Empfänger gleich der Transitzeit des durch den vierten Sender/Empfänger gesendeten Signals (2002).

24. Verfahren nach Anspruch 23, umfassend:

- die Übertragung - durch den zweiten Sender/Empfänger (22) zum ersten, dritten und vierten Sender/Empfänger (20, 24, 20') -, eines Signals (2210), wenigstens umfassend:

• die zweite Zeitdauer (TV1 R2), berechnet durch das Sender/Empfänger-Signal,
• und die fünfte Transitzeit (TR1'R2),

- die Berechnung oder Schätzung - durch den ersten, den dritten und den vierten Sender/Empfänger (20, 24, 20'), - von jeweils einer siebten, achten, neunten Transitzeit (TR2R1, TR2R1' und TR2R3) vom zweiten Sender/Empfänger (22) jeweils zum ersten, vierten und dritten (24) Sender/Empfänger gleich der Transitzeit des genannten, durch den zweiten Sender/Empfänger zum ersten, dritten und vierten Sender/Empfänger (20, 24, 20') gesendeten Signals (2210).

**25.** Verfahren nach Anspruch 24, umfassend:

- die Übertragung - durch den dritten Sender/Empfänger (24) zum ersten, zweiten und vierten Sender/Empfänger (20, 22, 20') -, eines Signals (2410), wenigstens umfassend:

  • die dritte Zeitdauer (TV1 R3), berechnet durch den dritten Sender/Empfänger,
  • die sechste Transitzeit (TR1'R3),
  • und die neunte Transitzeit (TR2R3),

- die Berechnung oder Schätzung - durch den ersten, den zweiten und den vierten Sender/Empfänger (20, 22, 20'), - von jeweils einer zehnten, elften, zwölften Transitzeit (TR3R1, TR3R1' und TR3R2) vom dritten Sender/Empfänger (22) jeweils zum ersten, vierten und zweiten Sender/Empfänger gleich der Transitzeit des genannten, durch den dritten Sender/Empfänger zum ersten, vierten und zweiten Sender/Empfänger (20, 22, 20') gesendeten Signals (2410).

**26.** Verfahren nach einem der Ansprüche 18 bis 25, wobei die drei Sender/Empfänger eine erste Einheit bilden und der vierte Sender/Empfänger Teil einer zweiten Einheit aus drei Sendern/Empfängern ist.

**27.** Verfahren nach einem der Ansprüche 1 bis 19, wobei die drei Sender/Empfänger eine erste Einheit bilden und eine zweite Einheit aus wenigstens drei Sendern/Empfängern die Schritte A) - E) durchführt, auf parallele oder unabhängige Weise in Bezug auf die ersten Einheit.

**28.** Verfahren nach einem der Ansprüche 1 bis 27, bei dem der zu ortende Sender/Empfänger unter Schnee begraben ist.

**29.** Verfahren nach Anspruch 28, bei dem während des Schritts E eine Korrektur durchgeführt wird, um bei den Ankunftszeiten Verzögerungen zu berücksichtigen, verursacht durch die Ausbreitung der Signale im Schnee.

**30.** Verfahren nach einem der Ansprüche 1 bis 29, bei dem die Sender/Empfänger beim Senden als Standardeinstellung identische Spreizsequenzen benutzen.

**31.** Vorrichtung zur Ortung eines UWB-Senders/Empfängers, umfassend:

- wenigstens 3 Suchsender/-empfänger, jeder UWB-Sende-Empfangseinrichtungen umfassend,
- diese Suchsender/-empfänger dabei in Ruhestellung zusammengeschaltet sind und bei einer Ortung eines UWB-Senders/Empfängers getrennt werden können,
- Einrichtungen zur Synchronisierung der Suchsender/-empfänger im zusammengeschalteten Zustand,
- Einrichtungen zur Synchronisierung der Suchsender/-empfänger im getrennten Zustand und zur Schätzung der Relativabstände dieser Sender/Empfänger wenn sie in verschiedenen Punkten angeordnet sind,
- Einrichtungen zur Berechnung von n Zeitdauern zwischen einer Ankunftszeit eines durch einen zu ortenden Sender gesendeten Signals und einer gemeinsamen Referenzzeit,
- Einrichtungen (31) zur Berechnung - ohne vorher festgelegten Referenzpunkt - der Position eines zu ortenden Senders in Abhängigkeit von den Wegdauern von durch diesen zu ortenden Sender zu den Suchsendern/-empfängern gesendeten Signalen, von den n berechneten Zeiten und von den durch diese Sender/Empfänger geschätzten Relativabständen,
- Anzeigeeinrichtungen (26), um wenigstens die Position des zu ortenden Senders in Bezug auf diejenige der Suchsender/-empfänger anzuzeigen.

**32.** Vorrichtung nach Anspruch 31, wobei die Berechnungseinrichtungen der Position eines zu ortenden Senders/Empfängers und die Anzeigeeinrichtungen Teil eines der Suchsender/-empfänger sind.

**33.** Vorrichtung zur Ortung eines UWB-Senders/Empfängers, wenigstens 3 Suchsender/-empfänger umfassend, programmiert zur Anwendung eines Verfahrens nach einem der Ansprüche 1 bis 29.

**34.** Vorrichtung nach einem der Ansprüche 31 bis 33, **dadurch gekennzeichnet, dass** sie in CMOS- oder BiCMOS-

Technologie realisiert ist.

FIG. 1

FIG. 2A

FIG. 2B

FIG. 3

FIG. 4A

FIG. 4B

| P | PD | D |
|---|----|---|

## FIG. 5

S1 — ACTIVATION DU MODE RECHERCHE POUR LE DISPOSITIF INITIATEUR 20

S2 — MISE EN PLACE DES POINTS DE REFERENCE SUR LA SCENE D'INVESTIGATION ET SYNCHRONISATION DU SYSTEME COMPLET

S3 — DETECTION, IDENTIFICATION DES VICTIMES ET ESTIMATION DES TEMPS D'ARRIVEE PAR LES POINTS DE REFERENCE

S4 — CALCUL DE LA POSITION DES VICTIMES

## FIG. 6

S10 — EMISSION D'UN SIGNAL DE
RE-SYNCHRONISATION PAR 20

S11 — ESTIMATION DE TR1R2 ET TR1R3
PAR 22 ET 24

> PHASE a

S13 — EMISSION D'UN SIGNAL DE
REFERENCE PAR VI

S14 — ESTIMATION DE TVIR1, TVIR2 ET
TVIR3 PAR 20, 22, 24

> PHASE b

S15 — RETRANSMISSION DE TVIR2
ESTIME PAR 22 VERS 20 ET 24

S16 — ESTIMATION DU TR2R3 PAR 24   > PHASE c

S17 — RETRANSMISSION DE TVIR3 ET
TR2R3 ESTIME PAR 24 VERS 20

S19

CALCUL CENTRALISE
DES TDOA PAR 20

CALCUL CENTRALISE DES
POSITIONS RELATIVES DES
POINTS DE REFERENCE 22 ET
24 PAR RAPPORT A 20

S18

CALCUL CENTRALISE DES
POSITIONS RELATIVES DES
POINTS A LOCALISER VI PAR
RAPPORT AUX POINTS DE
REFERENCE 20, 22, 24

POSITIONS
RELATIVES DE 22
ET 24 PAR
RAPPORT A 20

S20

# FIG. 7A

S30 — EMISSION D'UN SIGNAL DE SYNCHRONISATION PAR R1

S31 — ESTIMATION DE TR1R2 ET TR1R3 PAR 22 ET 24 ET SYNCHRONISATION RELATIVE DE 20' SUR 20

S32 — EMISSION D'UNE REQUETE D'ADHESION A LA RECHERCHE PAR 20' VERS 20

S33 — ESTIMATION DE TR1'R1 PAR 20

S34 — EMISSION DE L'ACQUITTEMENT PAR 20 VERS 20'

S35 — ESTIMATION DE TR1R1' PAR 20'

S36 — SYNCHRONISATION STRICTE DE R1' SUR R1

> PHASE a'

S37 — EMISSION D'UN SIGNAL DE REFERENCE PAR VI

S38 — ESTIMATION DE TVIR1, TVIR2, TVIR3 ET TVIR1' PAR 20, 22, 24, ET 20'

> PHASE b'

S39 — RETRANSMISSION DE TVIR1' ESTIME PAR 20' VERS 20, 22, ET 24

S40 — ESTIMATION DU TR1'R2 TR1'R3 PAR 22 ET 24

S41 — RETRANSMISSION DE TVIR2 ESTIME PAR 22 VERS 20 ET 24

S42 — ESTIMATION DU TR2R3 PAR R3

S43 — RETRANSMISSION DE TVIR3 ET TR2R3 ESTIME PAR R3 VERS R1

> PHASE c'

CALCUL CENTRALISE DES TDOA PAR 20

CALCUL CENTRALISE DES POSITIONS RELATIVES DES POINTS DE REFERENCE 22 ET 24 PAR RAPPORT A 20 — S44

CALCUL CENTRALISE DES POSITIONS RELATIVES DES POINTS A LOCALISER VI PAR RAPPORT AUX POINTS DE REFERENCE 20, 22, 24

POSITIONS RELATIVES DE R2 ET R3 PAR RAPPORT A R1

FIG. 7B

S100 — EMISSION PASSIVE DES POINTS A LOCALISER

S101 — ESTIMATION DES TOA/OWR PAR LES POINTS DE REFERENCE 200, 220 ET 240

S102 — RETRANSMISSION DES TOA ESTIMES PAR LES REFERENCES 220 ET 240 VERS LA REFERENCE 200

S103 — CALCUL CENTRALISE DES TDOA PAR LA REFERENCE 200

S104 — CACUL CENTRALISE DE LA POSITION DES VICTIMES A LOCALISER

# FIG. 7C

## FIG. 8A

## FIG. 8B

FIG. 9

EP 1 754 077 B1

FIG. 10

FIG. 11

FIG. 12

FIG. 13

**EP 1 754 077 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.CAFFERY et al.** Subscriber location in CDMA cellular networks. *Vehicular Technology, IEEE Transactions,* Mai 1998, vol. 47, 406-416
- **Y.T CHAN et al.** A simple and efficient estimator for hyperbolic location. *IEEE Transactions Acoustic, Speech and Signal Processing,* Août 1994, vol. 42, 1905-1915

- An improved Taylor algorithm in TDOA subscriber position location. *Proceding of the Int. Conf. on Communication Technology,* 09 Avril 2003, vol. 2, 981-984